# EUROPEAN PATENT APPLICATION

(11) **EP 3 065 098 A1**
(43) Date of publication of application: **07.09.2016**
(21) Application number: 16000081.6
(22) Date of filing: 14.01.2016
(51) Int. Cl.: G06Q 20/32, G06F 3/0488

(54) **MOBILE TERMINAL AND METHOD FOR CONTROLLING THE SAME**

(30) Priority: 05.03.2015 US 201562129027 P; 03.04.2015 KR 20150047779
(71) Applicant: LG Electronics Inc., Seoul 07336 (KR)
(72) Inventor: CHO, Taehoon, 06772 Seoul (KR); KWON, Yunmi, 06772 Seoul (KR); LEE, Kiseon, 06772 Seoul (KR); SEOL, Jie, 06772 Seoul (KR)
(74) Representative: Beyer, Andreas

(57) **Abstract**

The present invention relates to a mobile terminal capable of performing simple pay using registered card information after information of a real card is registered at the mobile terminal and a method of controlling therefor. To achieve these objects and other advantages and in accordance with the purpose of the invention, as embodied and broadly described herein, according to one embodiment, a mobile terminal, includes a touch screen capable of outputting at least one card image and a controller. The controller is capable of controlling a first card image corresponding to a card image to be outputted in response to a first drag input, less than a predetermined reference value, on the touch screen, and controlling a plurality of card images to be outputted at the same time in response to a second drag input, equal to or greater than the predetermined reference value, on the touch screen, wherein at least one of the plurality of the card images corresponds to a card image corresponding to location information of the mobile terminal.

## Description

### BACKGROUND OF THE INVENTION

### Field of the Invention

The present invention relates to a mobile terminal capable of performing simple pay using registered card information after information of a real card is registered at the mobile terminal and a method of controlling therefor.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

A function of a mobile terminal is diversifying. For instance, the function of the mobile terminal may include data and audio communication, picture and video capturing via a camera, voice recording, playing a music file via a speaker system and outputting an image or a video on a display unit. Some terminals perform a function of an electronic game or a function of a multimedia player. In particular, a latest mobile terminal can receive a multicast signal providing visual contents such as a broadcast, a video and a television program.

As a function of a terminal is diversified, the terminal is implemented in a multimedia player form equipped with complex functions including capturing a picture or a video, playing music or a video file, gaming, receiving a broadcast and the like for example.

Recently, with the help of development of FinTech (finance technology), an area to which a mobile terminal is applicable is expanding to a payment field. As an example, if a mobile card is issued to a mobile terminal, a user is able to purchase a product in a manner of simply approaching the mobile terminal to which the mobile card is issued to an NFC payment terminal.

Meanwhile, in order to advance settlement in a mobile terminal, there still exists inconvenience in that a credit card for the use of the mobile terminal should be separately issued. Moreover, in case that a plurality of cards are issued to the mobile terminal, a method capable of managing a plurality of the cards at a time has not been discussed at all yet.

### SUMMARY OF THE INVENTION

Accordingly, embodiments of the present invention are directed to a mobile terminal and controlling method thereof that substantially obviate one or more problems due to limitations and disadvantages of the related art.

One object of the present invention is to provide a mobile terminal increasing user convenience and a method of controlling therefor.

Specifically, the present invention intends to provide a mobile terminal capable of using a real card in a manner of registering the real card at the mobile terminal and a method of controlling therefor.

Another object of the present invention is to provide a mobile terminal capable of minimizing security risk, which could happen if credit card payment is performed via user authentication, and a method of controlling therefor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one embodiment, a mobile terminal, includes a touch screen capable of outputting at least one card image and a controller. The controller is capable of controlling a first card image corresponding to a card image to be outputted in response to a first drag input, less than a predetermined reference value, on the touch screen, and controlling a plurality of card images to be outputted at the same time in response to a second drag input, equal to or greater than the predetermined reference value, on the touch screen, wherein at least one of the plurality of the card images corresponds to a card image corresponding to location information of the mobile terminal.

To further achieve these objects and other advantages and in accordance with the purpose of the invention, as embodied and broadly described herein, according to a different embodiment, A method of controlling a mobile terminal, comprising the steps of: outputting a first card image corresponding to a card image in response to a first drag input which is less than a predetermined reference value on a touch screen; and outputting a plurality of card images at the same time if a second drag input equal to or greater than the predetermined reference value is received on the touch screen, wherein at least one of a plurality of the card images corresponds to a card image corresponding to location information of the mobile terminal.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIG. 1D is a conceptual diagram for a mobile terminal communicating with a payment terminal;
FIG. 2 is a flowchart for explaining an operation of registering a card at a mobile terminal;
FIGS. 3A and 3B are diagrams for an example of extracting card information from a picture;
FIGS. 4A and 4B are diagrams for an example of outputting extracted card information;
FIG. 5 is a diagram for an example of outputting a screen requesting a password before a card is registered;
FIG. 6 is a diagram for an example of outputting a screen requesting a password input of a different form;
FIGS. 7A, 7B and 7C are diagrams for an example of a message transmitted to a terminal of a card holder;
FIG. 8 is a flowchart for explaining an example of advancing settlement using a registered card;
FIGS. 9A, 9B and 9C are diagrams for an example of outputting a list of registered cards;
FIGS. 10A and 10B are diagrams for an example of deleting a registered card;
FIG. 11 is a diagram for an example of distinctively and visually displaying a main card;
FIGS. 12A and 12B are diagrams for explaining an operation of a mobile terminal when one item is selected from a list of cards;
FIGS. 13A, 13B and 13C are diagrams for an example of outputting a card image of a registered card in response to a predetermined user input;
FIGS. 14A and 14B are diagrams for an example of outputting a card image according to whether a password is cancelled;
FIGS. 15A, 15B, 15C, 16A, 16B and 16C are diagrams for an example of controlling the number of card images and a type of card images outputted via a display unit according to a type of a drag input;
FIGS. 17A, 17B and 17C are diagrams for an example of outputting a card indicated by voice of a user;
FIGS. 18A, 18B and 18C are diagrams for an example of outputting a card image of a card appropriate for a purchase of a user;
FIGS. 19A and 19B are diagrams for an example of outputting a card image related to an application currently executed via a mobile terminal;
FIGS. 20A, 20B, 20C and 20D are diagrams for an example of outputting a menu for mapping cards different from each other according to each finger;
FIGS. 21A, 21B and 21C are diagrams for explaining an operation of a mobile terminal when a navigation key is touched to check a recently executed application;
FIGS. 22A to 22C are diagrams for an example of changing color or a background of a card image;
FIGS. 23A and 23B are diagrams for an example of outputting use breakdown information of a card;
FIGS. 24A and 24B are diagrams for an example of changing an output of a display unit 151 from a front side image of a card to a back side image of the card;
FIGS. 25A, 25B, 26A, 26B, 27A and 27B are diagrams for an example of an operation of a mobile terminal when a drag input is received while a card image is outputted;
FIGS. 28A, 28B, 28C and 28D are diagrams for an example of outputting information indicating that user authentication is completed;
FIG. 29 is a diagram for an example of terminating transmission of card information as a payment is completed;
FIG. 30 is a diagram for an example of terminating transmission of card information as a display unit 151 is turned off;
FIG. 31 is a diagram for an example of terminating transmission of card information after prescribed time elapses;
FIG. 32 is a diagram for an example of terminating transmission of card information as a different card is selected;
FIG. 33 is a diagram for an example of changing card information that is transmitted;
FIGS. 34A and 34B are diagrams for an example of a user authentication affecting a plurality of displayed cards;
FIGS. 35A, 35B and 35C are diagrams for an example of an output of a display unit 151 when a user authentication is performed in a state that a plurality of cards are displayed;
FIG. 36 is a diagram for an example of outputting trade information;
FIG. 37 is a diagram for a UI provided to demand restriction on use of a real card;
FIG. 38 is a diagram for an example of restricting use of a card owned by a different person;

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

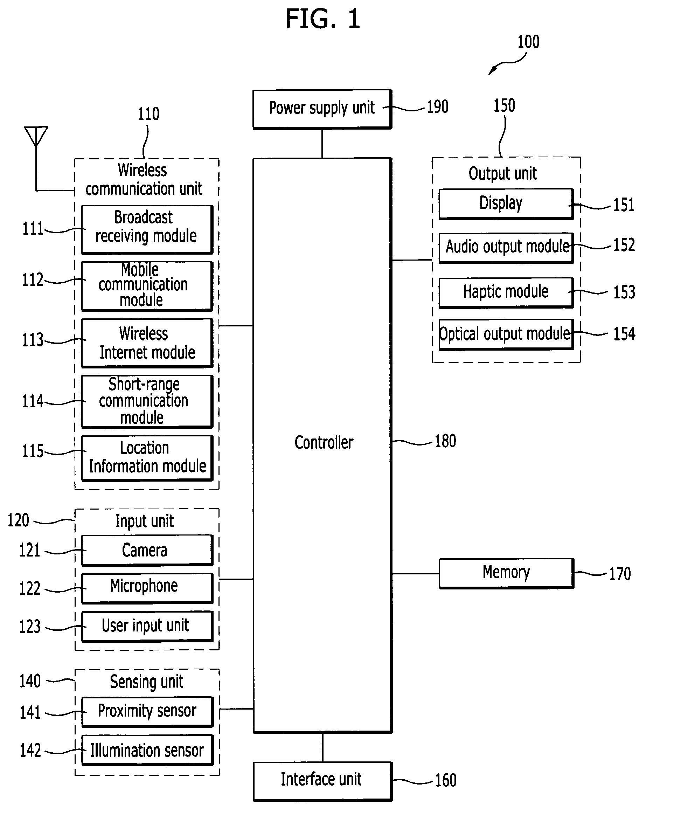

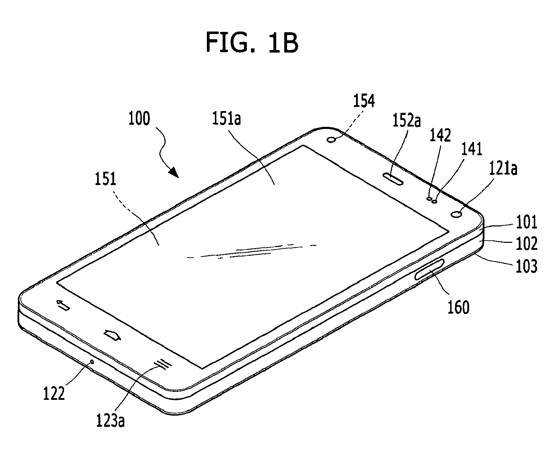

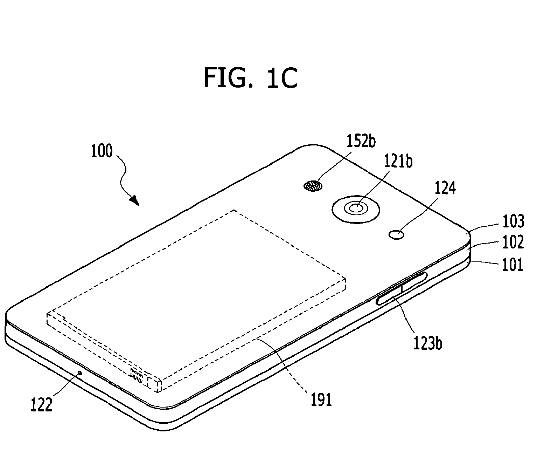

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

For clarity, assume that a mobile terminal according to the present invention includes at least one or more configuration elements shown in FIG. 1a to FIG. 1c. As an example, it may be able to assume that the mobile terminal according to embodiments described in the following includes a wireless communication unit 110, a camera 121, a sensing unit 140, a display unit 151, a memory 170, a controller 180 and the like among the configuration elements shown in FIG. 1a to FIG. 1c.

In this case, the wireless communication unit 110 can include a communication module for communication between the mobile terminal and a payment terminal.

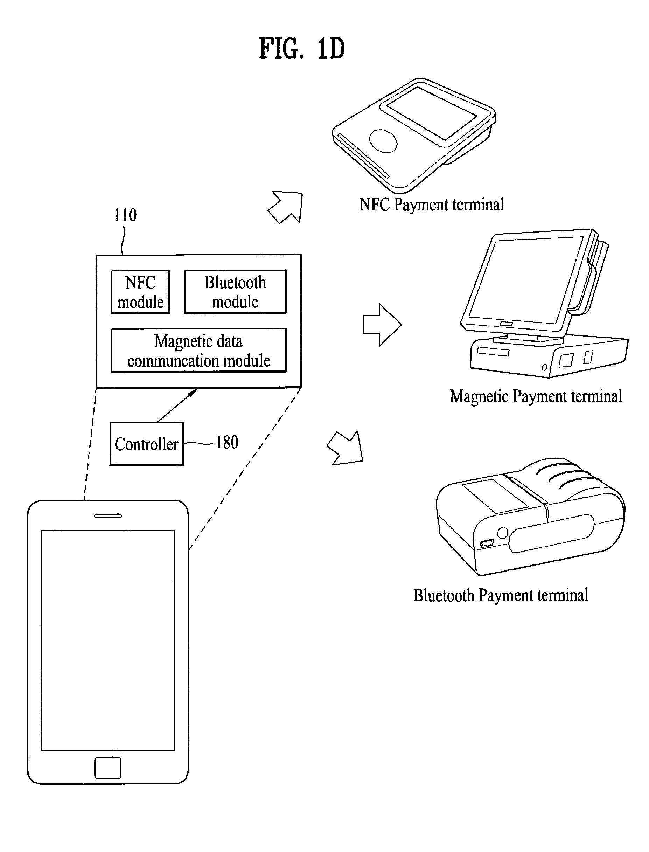

As an example, FIG. 1D is a conceptual diagram for a mobile terminal communicating with a payment terminal. As shown in an example of FIG. 1D, a mobile terminal can perform communication with at least one selected from the group consisting of an NFC payment terminal, a Bluetooth (e.g., BLE (Bluetooth low energy) payment terminal and a magnetic payment terminal. In order to perform communication with at least one selected from the group consisting of the NFC payment terminal, the Bluetooth payment terminal and the magnetic payment terminal, the mobile terminal can include at least one selected from the group consisting of an NFC module, a Bluetooth module and a magnetic communication module.

The NFC module is used to perform communication with the NFC payment terminal using an NFC technology. As an example, the NFC module of the mobile terminal is configured by a card emulation mode and the NFC payment terminal is configured by a reader mode. By doing so, the NFC payment terminal can obtain card information registered at the mobile terminal from the NFC module of the mobile terminal. As a different example, the NFC module and the NFC payment terminal can perform communication with each other in a manner of being configured by a P2P mode together.

The Bluetooth module is used to perform communication with the Bluetooth payment terminal using a Bluetooth technology. As an example, if the Bluetooth module of the mobile terminal receives a beacon signal from the Bluetooth payment terminal, the Bluetooth module can establish association with the payment terminal based on the received beacon signal. By doing so, the mobile terminal can transmit card information registered at the mobile terminal to the Bluetooth payment terminal via the Bluetooth module.

The magnetic communication module is used to perform communication with a payment terminal (i.e., magnetic payment terminal) in which a magnetic reader is installed. If a card to be used is selected, the mobile terminal can broadcast card information of the selected card via the magnetic communication module. A payment can be performed between the mobile terminal and the magnetic payment module in a manner that the magnetic payment module listens to data broadcasted by the mobile terminal.

The mobile terminal according to the present invention may include a bio-information recognition unit configured to receive bio-information of a user. As an example, the mobile terminal can include a camera 121 configured to recognize iris of a user or a fingerprint input unit configured to receive an input of a fingerprint of a user. In this case, the fingerprint input unit may form a layer structure with a button (e.g., a home button exposed to a front side of the mobile terminal) mounted on the mobile terminal. In this case, if a user pushes the home button, a user input pushing the home button and a fingerprint of the user can be inputted at the same time. In order to prevent unnecessary power consumption, if the button forming the layer structure with the fingerprint input unit is pushed, the controller 180 can control the fingerprint input unit to be activated.

In embodiments described in the following, it may assume that the display unit 151 is implemented in a touch screen form. If the display unit 151 is implemented in the touch screen form, the display unit 151 may be able to play a role of an output device configured to output information and an input device configured to receive a touch input.

The embodiments described in the following disclose a method of checking card information of a card after the card is registered at a mobile terminal and a method of performing payment using the registered card. In this case, registration of the card information, checking the card information and a payment process can be implemented on a payment application installed in the mobile terminal. In the following, although a card information registration step and a payment step are explained in a manner of being separated from each other, it is apparent that all of the embodiments described in the following can be applied to the mobile terminal according to the present invention.

In the following, the mobile terminal according to the present invention is explained in detail with reference to drawings described in the following.

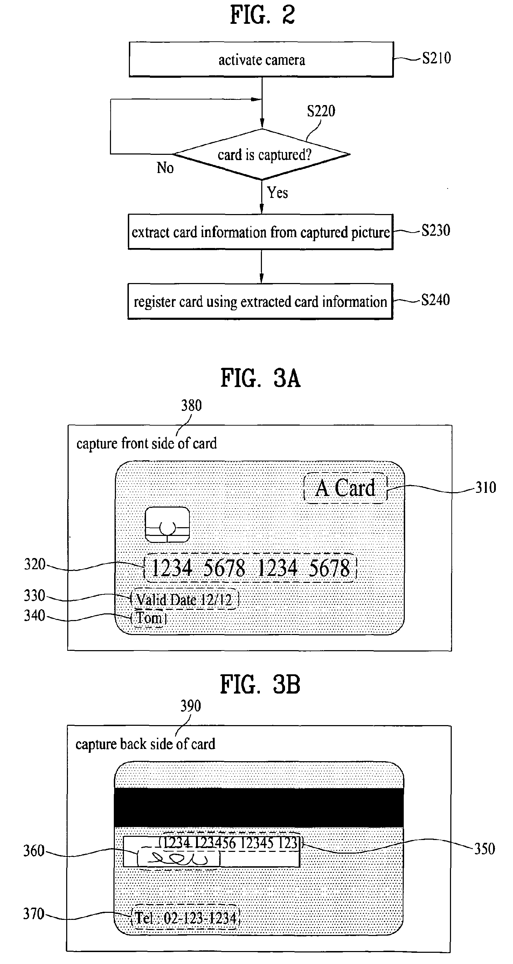

FIG. 2 is a flowchart for explaining an operation of registering a card at a mobile terminal. If a payment application is executed and a menu for newly registering a card is selected, the controller 180 can activate the camera 121 [S201]. If a card is captured by the camera 121 [S202], the controller 180 extracts card information from a picture captured by the camera 121 [S203] and may be then able to register the card at the mobile terminal using the extracted information [S204].

As an example, FIGS. 3A and 3B are diagrams for an example of extracting card information from a picture. The controller 180 can extract card information from a card in a manner of recognizing an image and a text on the card. As an example, if a front side of the card is captured, the controller 180 can extract information on a card company or a card type from the card in a manner of recognizing a logo image or a text indicating a card name on the card and may be able to extract information on at least one selected from the group consisting of a card number, expiration date, and a card holder in a manner of recognizing a text on the card.

FIG. 3A is a diagram for an example of capturing a front side of a card. In the example shown in FIG. 3A, 'A card' 310 corresponds to a name of a card to be registered, '1234 5678 1234 5678' 320 corresponds to a card number of the card to be registered, '12/12' 330 corresponds to expiration date of the card to be registered and 'Tom' 340 may correspond to an owner of the card to be registered. The controller 180 can extract at least one or more information selected from the group consisting of a card company, a card name, a card number, expiration date, and a card holder from a picture of the front side of the card in a manner of recognizing a text and an image on the front side of the card.

If a back side of the card is captured, the controller 180 can extract at least one of CVC (card validation code) information and a card hotline from the card in a manner of recognizing a text on the card and may be able to extract a signature image from the card in a manner of recognizing a signature block on the card.

FIG. 3B is a diagram for an example of capturing a back side of a card. In the example shown in FIG. 3B, '1234 123456 12345 123' 350 corresponds to CVC of a card to be registered, '02-123-1234' 370 corresponds to a card hotline, and a handwriting 360 written on a signature block may correspond to a signature of a user. The controller 180 can extract at least one or more information selected from the group consisting of the CVC, the card hotline and the signature image from a picture of the back side of the card in a manner of recognizing a text and an image.

In order to extract card information from both sides of a card, if one side of the card is captured, the controller 180 can control a message guiding to take a picture of another side of the card to be outputted. As an example, as shown in FIG. 3A and 3B, a message 380/390 guiding a side of a card to be captured is outputted on a capturing screen.

If card information, which is necessary for registering a card, is extracted, the controller 180 can display the extracted card information. A user can check whether the card information is properly extracted in a manner of checking the displayed card information.

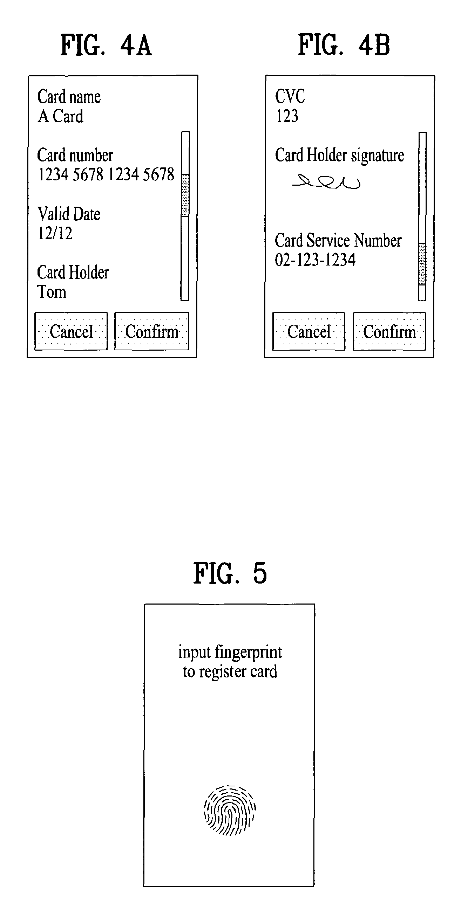

As an example, FIGS. 4A and 4B are diagrams for an example of outputting extracted card information. FIGS. 4A and 4B show an example that a card name, a card number, expiration date, a card holder, CVC, a signature and a card hotline are outputted. Moreover, FIGS. 4A and 4B show an example that card information of a card to be registered can be checked by scrolling the display unit 151.

A value of each field can be manually modified by a user. As an example, if there is an error in a recognized card number, the user can correct the error on the card number in a manner of modifying a value of a card number field.

If it fails to extract a specific field value from a captured picture, the field may be configured by an empty space. As an example, if it fails to extract card holder information from a captured picture, a card holder field can be configured by an empty space. In this case, a user can directly input a suitable field value to the card holder field.

According the aforementioned example, information on a card to be registered is automatically extracted from a picture captured by the camera 121. Unlike the example, the information on the card to be registered can be manually inputted by a user as well. As an example, if a menu for registering a card is selected on a payment application, the controller 180 can control a screen for inputting the information on the card to be registered to be outputted. In doing so, the controller 180 can register the card based on the inputted card information.

If card information is precisely inputted, the controller 180 can register a card based on the inputted card information. In this case, in order to prevent indiscreet card registration, the controller 180 can determine whether a card holder of a card to be registered corresponds to a user of a mobile terminal. The controller 180 can determine whether the card holder corresponds to the user of the mobile terminal in a manner of comparing a name of an extracted card holder and a name of a user registered at the mobile terminal with each other. Or, the controller 180 can determine whether the card holder corresponds to the user of the mobile terminal based on information received from an external server.

If the card holder and the user of the mobile terminal correspond to a same person, the controller 180 may ask the user to tap the display unit 151 according to bio-information, a predetermined text password, a predetermined touch pattern or a predetermined pattern or input such a password as a signature and the like before a card is registered.

As an example, FIG. 5 is a diagram for an example of outputting a screen requesting a password before a card is registered. FIG. 5 shows an example of outputting a screen requesting a fingerprint input for card registration.

If it is determined as an inputted password is valid, the controller 180 can register a card. On the contrary, if it is determined as the inputted password is invalid, the controller 180 may request to input a password of a different form.

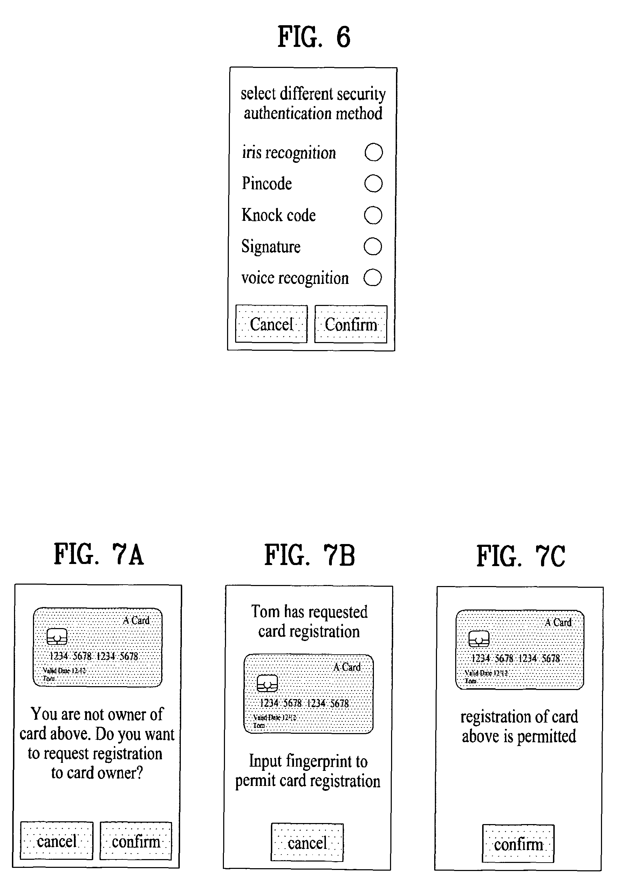

As an example, FIG. 6 is a diagram for an example of outputting a screen requesting a password input of a different form. In the example shown in FIG. 5, if it is determined as a fingerprint is not properly recognized or an inputted fingerprint is not matched with a registered fingerprint (more than prescribed times), as shown in the example shown in FIG. 6, the controller 180 can control a screen requesting a password input of a different form to be outputted.

FIG. 6 shows an example that iris, PIN (i.e., password), a knock code (as an example, tapping the display unit 151 according to a predetermined pattern), signature, voice or the like is inputted as a password rather than a fingerprint. If one is selected from a list of the password forms, the controller 180 can perform preparation for receiving a password of the selected form. As an example, in FIG. 6, if the iris is selected, the camera 121 can be activated to recognize iris of a user. If the PIN, the knock code or the signature is selected, UI can be outputted to receive an input of a password of the corresponding form. If the voice is selected, a microphone 122 can be activated to receive a voice input of a user.

If a password input of a different form is requested due to a failure of a password input, the controller 180 can register a card only when a plurality of password forms are authenticated. As an example, if a password input of a different form is requested due to fingerprint mismatch, the controller 180 can complete card registration only when authentication for at least two or more password forms selected from the group consisting of the iris, the PIN (i.e., password), the knock code, the signature and the voice shown in FIG. 6 is completed.

If a card holder and a user of a mobile terminal are not a same person, the controller 180 can transmit a message to a terminal of the card holder to check whether to permit card registration. Specifically, the controller 180 extracts contact information of a person including a name identical to a name of the card holder from the memory 170 and may be able to transmit the message to the terminal of the card holder based on the extracted contact information to check whether to permit the card registration.

As an example, FIGS. 7A to 7C are diagrams for an example of a message transmitted to a terminal of a card holder. In the example shown in FIG. 7A, if a user input requesting card registration is received by the terminal of the card holder via a mobile terminal, the controller 180 can transmit a message to the terminal of the card holder. FIG. 7A is a diagram for an example of an output of the mobile terminal and FIG. 7B is a diagram for an example of an output of the terminal of the card holder. FIG. 7B shows an example that card registration is permitted if a fingerprint of the card holder is inputted. In particular, if the fingerprint of the card holder is inputted, the terminal of the card holder can transmit information indicating that the card registration is permitted to the mobile terminal.

As a different example, the message may include a button for checking whether to permit card registration in the terminal of the card holder. If the button for checking whether to permit card registration included in the terminal of the card holder is touched, the terminal of the card holder can transmit information indicating that the card registration is permitted to the mobile terminal.

If the information indicating that the card registration is permitted is received, as shown in an example of FIG. 7C, the controller 180 outputs a message indicating that the card registration is permitted and can complete the card registration.

If the step S201 to the step S205 is repeated, the controller 180 can register a plurality of cards at the mobile terminal. For clarity, assume that a plurality of cards are registered at the mobile terminal in the following embodiments.

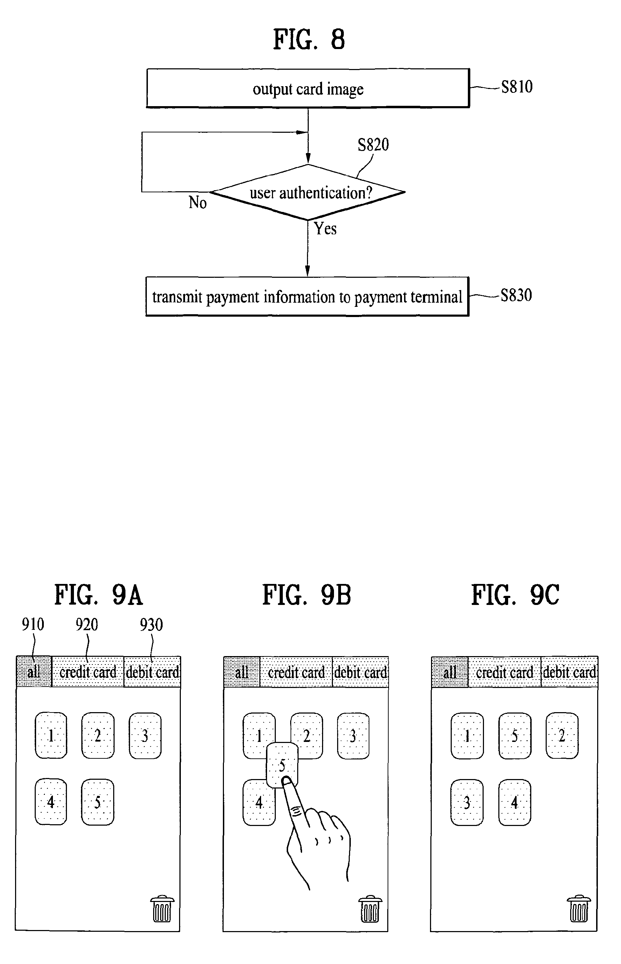

FIG. 8 is a flowchart for explaining an example of advancing settlement using a registered card.

First of all, the controller 180 can control a card image of a card to be used for a payment to be outputted via the display unit 151 [S810]. Various methods of outputting the card image are explained with reference to a drawing described in the following.

If a menu for checking information of a card registered at a mobile terminal is selected on a payment application or if card registration is completed, the controller 180 can control a list of registered cards to be outputted.

As an example, FIGS. 9A to 9C are diagrams for an example of outputting a list of registered cards. In the list of the registered cards shown in FIGS. 9A to 9C, each card is represented by an image shaping a card. In this case, identification information for identifying each card can be displayed on the image representing each card. In this case, the identification information can include a card name, card company information, a card number and the like. Yet, for clarity, a turn is written on each image to identify each card in FIGS. 9A to 9C.

Although each card included in the list of the registered cards is represented by an image, each card can be represented by a text explaining each card or a combination of the text explaining each card and an image explaining each card.

The controller 180 categorizes the registered cards according to a card type, a card owner, or a card company and may be then able to provide a list of cards included in a prescribed category to a user. As an example, in an example shown in FIGS. 9A to 9C, 'all' tab 910 is used to output all registered cards, 'credit card' tab 920 is used to output credit cards among the registered cards and 'debit card' tab 930 is used to output debit cards among the registered cards.

If a plurality of cards are included in a displayed card list, the controller 180 can arrange a plurality of the cards on the basis of an order of registration, a use frequency of a user, a limit of a card use, a type of a card, a card holder and the like.

An arrangement order of each card can be manually controlled by a user. As an example, in an example shown in FIG. 9A, when cards ranging from number 1 to 5 are sequentially arranged, if a card of number 5 is dragged and moved between a card of number 1 and a card of number 2 as shown in an example of FIG. 9B, the card of number 5 can be arranged between the card of number 1 and the card of number 2 as shown in an example of FIG. 9C.

If a user input for deleting a registered card is received, the controller 180 deletes card information and may be then able to eliminate a deleted card from a list of cards.

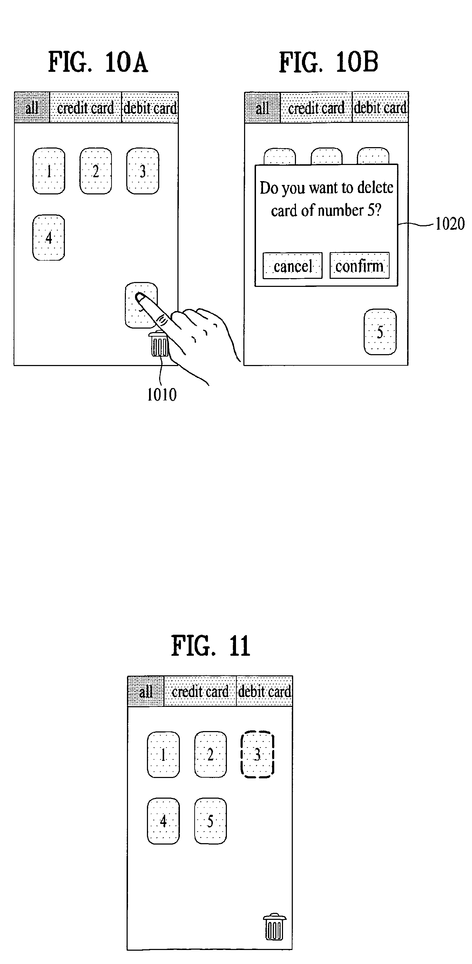

As an example, FIGS. 10A and 10B are diagrams for an example of deleting a registered card.

As an example, as shown in an example of FIG. 10A, if a user input for dragging a card of number 5 to a trash icon 1010 is received, as shown in an example of FIG. 10B, the controller 180 can control a pop-up window 1020 checking whether to delete the card of number 5 to be outputted. If a user input for requesting deletion of the card of number 5 is received, the controller deletes card information of the card of number 5 and may be then able to eliminate the card of number 5 from a list of cards.

Before a card is deleted, the controller 180 may ask a server of a card company to suspend a use of the deleted card. By doing so, a use of a real card (i.e., a plastic card) corresponding to the deleted card will be suspended as well.

At least one or more cards among a plurality of registered cards can be configured as a main card mainly used by a user. If the main card is selected, the controller 180 can control the main card to be visually and distinctively identified in a list of a plurality of the registered cards.

As an example, FIG. 11 is a diagram for an example of distinctively and visually displaying a main card. FIG. 11 shows an example that a card of number 3, which is selected as a main card, is visually distinguished from a different card.

If a user input for selecting a card, which is to be used for a payment, from a list of cards is received, the controller 180 can control a card image of the selected card to be outputted [S810].

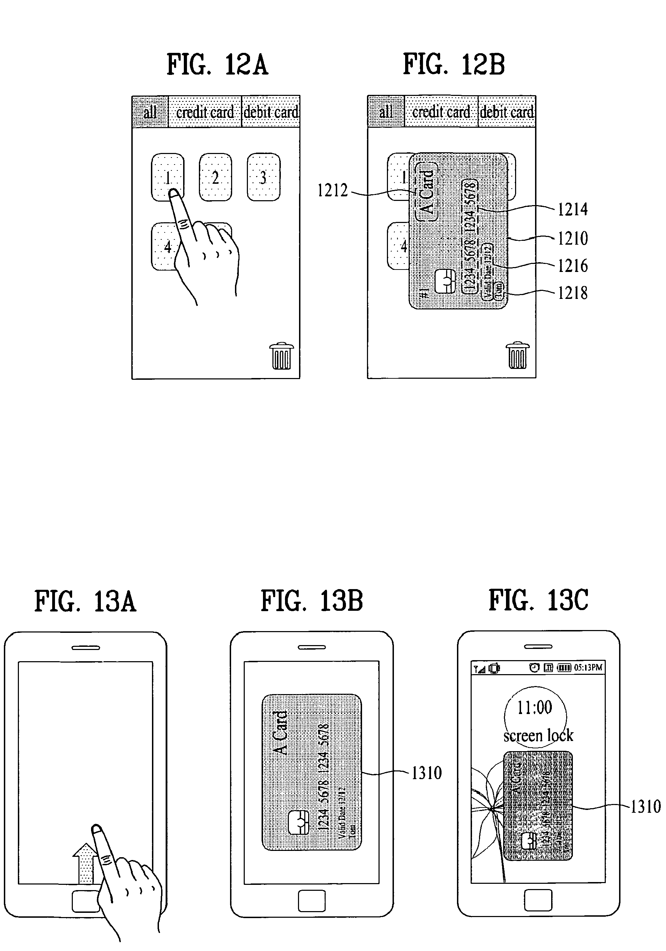

As an example, FIGS. 12A and 12B are diagrams for explaining an operation of a mobile terminal when one item is selected from a list of cards.

If one item is selected from a list of cards, the controller 180 can output a card image 1210 of a card corresponding to the selected item. As an example, in an example shown in FIG. 12A, if a card of number 1 is selected from the list of cards, the controller 180 can control a card image on which card information of the card of number 1 is written to be outputted. FIG. 12B shows an example that a card image including a name 12112 of the card of number 1, a card number 1214, a card holder 1216 and expiration date information 1218 is outputted.

FIGS. 12A and 12B show an example that a card image of a card corresponding to a selected item is outputted when an item is selected from a list of cards. Unlike the example, the controller 180 can output card information of a card selected by a user or use breakdown information of a selected card.

Although a payment application is not executed, the controller 180 can output a card image of a card registered by a user. Regarding this, it shall be explained in detail with reference to FIGS. 13A to 13C in the following.

FIGS. 13A to 13C are diagrams for an example of outputting a card image of a registered card in response to a predetermined user input. For clarity, assume that a mobile terminal is in an idle state. In this case, the idle state may correspond to a state that the mobile terminal is not in use. In order to reduce unnecessary power consumption, the display unit 151 can maintain an off state (or an inactivated state) in the idle state. In this case, the off state of the display unit 151 corresponds to a state that a light lighting the display unit 151 is turned off. No information or no graphic image is outputted on the display unit 151 in the state that the display unit 151 is turned off. On the contrary, a state (or an activated state) that the display unit 151 is turned on may correspond to a state that a light lighting the display unti151 is turned on. Information or a graphic image can be outputted according to a control of the controller 180 in the state that the display unit 151 is turned on.

Meanwhile, a touch sensor, which forms a mutual layer structure with the display unit 151, can be periodically activated to detect a touch input. Hence, a mobile terminal can receive a touch input even in a state that the display unit 151 is turned off.

In this case, an interval of activating the touch sensor may vary according to whether the display unit 151 is turned on or off. As an example, if the display unit 151 is turned on, the touch sensor always maintains an activated state or can be repeatedly activated with a short interval to immediately respond to a user input (i.e., the touch sensor is activated in every first interval). On the contrary, if the display unit 151 is turned off, the touch sensor can be activated with a longer interval to reduce unnecessary power consumption (i.e., the touch sensor is activated in every second interval (> first interval)). If a predetermined user input is received in a state that the display unit 151 is turned off, the controller 180 turns on the display unit 151 and can control card information of a registered card to be outputted. FIGS. 13A and 13B show an example that a card image 1310 including the card information of the registered card is outputted while the display unit 151 is turned on.

In this case, the controller 180 can control the card image 1310 to be displayed on a lock screen or a home screen in a manner of being overlaid. As an example, FIG. 13C shows that the lock screen is outputted while the display unit 151 is turned on and the card image 1310 is outputted on the lock screen in a manner of being overlaid.

As shown in an example of FIG. 13A, a predetermined user input for calling out a card may correspond to a drag input dragging a pointer, which has touched an edge of the display unit 151, in a prescribed direction, by which the present invention may be non-limited.

FIGS. 13A and 13B show an example that a single card image is outputted on the display unit 151 in response to a predetermined user input. Unlike the example, the controller 180 can control a plurality of card images to be outputted on the display unit 151 in response to the predetermined user input.

In order to prevent card use of an unspecified person, the controller 180 can control a card image to be outputted when a predetermined user input is received after a proper fingerprint is inputted. In this case, the proper fingerprint may correspond to a fingerprint, which is determined as a fingerprint identical to a fingerprint registered at a mobile terminal in advance.

As a different example, if a predetermined user input is received after a user input pushing a home button with a predefined number is received or if a predetermined user input is received after both a user input pushing the home button and a fingerprint input are received, the controller 180 can control a card image to be outputted. As a further different example, if a proper fingerprint is inputted, the controller 180 can control a card image to be outputted.

If a predetermined user input is received, the controller 180 can control a card image to be outputted in response to the predetermined user input not only in a case that a mobile terminal is in an idle state but also in a case that the idle state of the mobile terminal is cancelled (i.e., in a state that the display unit 151 is turned on).

Yet, if a card image including card information is displayed by a predetermined user input in an idle state, there exists risk of thoughtlessly exposing the card information to a third party instead of a card holder.

Hence, when a password is set to a mobile terminal, the mobile terminal according to the present invention distinguishes a case of receiving a predetermined user input in a state that the password is cancelled from a case of receiving the predetermined user input in a state that the password is not cancelled. In the former case, the mobile terminal outputs a card image including card information. In the latter case, the mobile terminal outputs a card image not including the card information, a card image restrictively including the card information or a card image including false card information. In this case, the false card information may correspond to falsified card information in order not to be matched with registered card information.

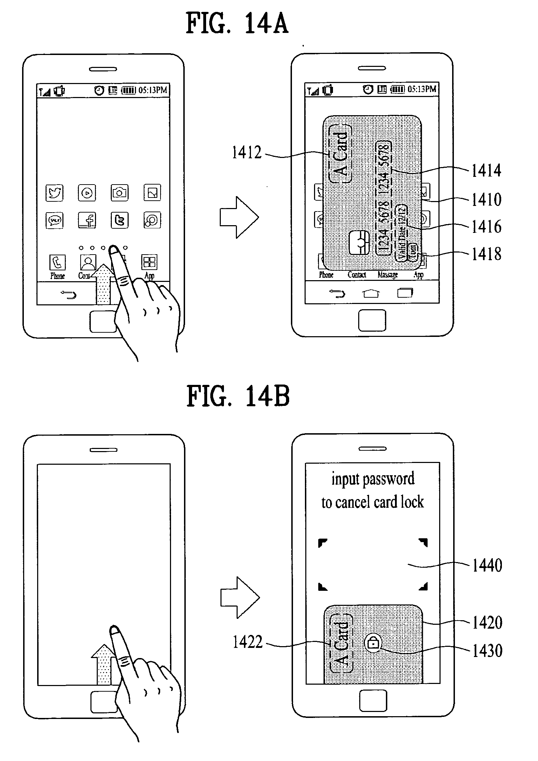

As an example, FIGS. 14A and 14B are diagrams for an example of outputting a card image according to whether a password is cancelled.

If a predetermined user input is received in a state that a password of a mobile terminal is cancelled (e.g., a state that the password of the mobile terminal is cancelled and a home screen is outputted via the display unit 151), as shown in an example of FIG. 14A, the controller 180 can control a card image 1410 on which card information is written to be outputted. The example of FIG. 14A shows that such card information as a card name 1412, a card number 1414, expiration date 1416, a card holder 1418, and the like are outputted on the card image 1410.

Unlike the example shown in the drawing, if a predetermined user input is received in a state that a password of a mobile terminal is not cancelled (e.g., a state that the mobile terminal is in an idle state or a state that UI for password input is outputted since a password is not cancelled, although the idle state of the mobile terminal is terminated), while outputting a card image 1420 in response to the user input, the controller 180 can control card information not to be outputted on the card image or can control the card information to be restrictively outputted on the card image. As an example, FIG. 14B shows an example that a card name 1422 is displayed on the card image 1420 only and sensitive information such as a card number, expiration date and the like are not displayed on the card image.

In this case, as shown in the example shown in FIG. 14B, the controller 180 can control an icon (a padlock image 1430 in FIG. 14B) indicating that the card is in a locked state to be outputted on the card image 1420. As described later, using the card of the locked state can be suspended until the lock is cancelled.

If the card image of the locked state is touched, the controller 180 can control UI for cancelling the password of the mobile terminal to be outputted together with the card image of the locked state. As an example, FIG. 14B shows an example that a password input UI 1440 capable of inputting a password is outputted together with the card image of the locked state.

If a proper password is inputted via the password input UI and the password of the mobile terminal is cancelled, the controller 180 cancels lock of the card and can control card information such as a card number, expiration date and the like to be outputted on the card image. In this case, a password for cancelling the lock of the card may have a form of bio-information (iris or a fingerprint), a predetermined text password, a predetermined touch pattern, tapping the display unit 151 according to a predetermined pattern, signature and the like.

As a different example, the controller 180 can determine whether to configure a card image by a lock state according to a type of a card. As an example, if a card to be called corresponds to a membership card or a point card, which has no payment function, the controller outputs a card image in a state that lock is cancelled and can enable a user to use the card immediately. On the contrary, if a card to be called corresponds to a credit card or a debit card, which has a payment function, the controller outputs a card image in a lock state and can enable a user not to use the card until the lock is cancelled. In this case, if the mobile terminal is in the lock state, the controller 180 preferentially outputs the membership card or the point card, which has no payment function, in response to a user input. If the mobile terminal is in the unlock state, the controller 180 can control the credit card or the debit card, which has a payment function, to be preferentially outputted in response to a user equipment.

As a different example, whether to configure a card by a lock state can be controlled by a user input. In particular, a user can individually select a card to be configured by the lock state on a payment application.

As shown in the example of FIGS. 13A to 13C or FIGS. 14A to 14B, in case of outputting a card image of a registered card by a drag input, the controller 180 can control the number of card images and a type of card image to be outputted according to a distance of a pointer moved when the drag input is inputted, a direction of the drag input and the like.

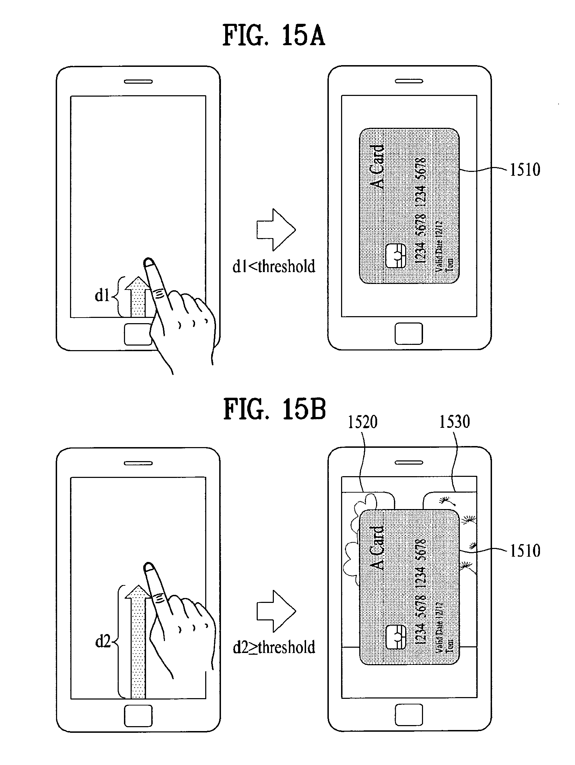

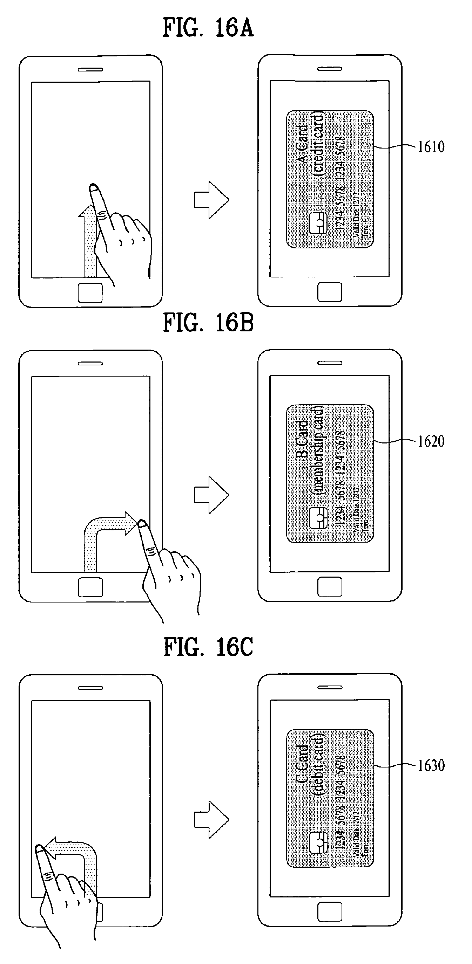

As an example, FIGS. 15A-15C and 16A-16C are diagrams for an example of controlling the number of card images and a type of card images outputted via a display unit according to a type of a drag input.

If a drag input of which a moving distance of a pointer is less than a predetermined reference value dragging to a predefined direction is received, as shown in an example of FIG. 15A, the controller 180 can control a single card image 1510 to be outputted only.

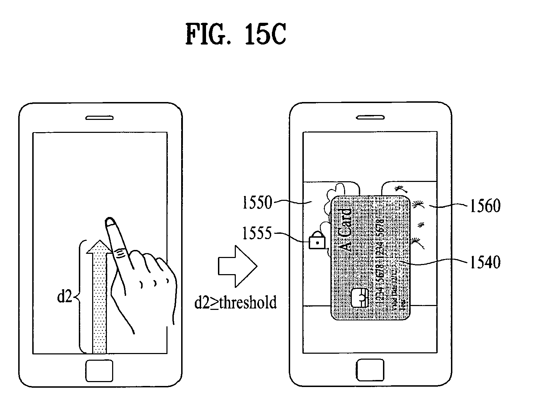

Unlike the example, if a drag input of which a moving distance of a pointer is equal to or greater than a predetermined reference value dragging to a predefined direction is received, as shown in an example of FIG. 15B, the controller 180 can control a plurality of card images 1510/1520/1530 to be outputted at the same time. Also, if a drag input of which a moving distance of a pointer is equal to or greater than a predetermined reference value dragging to a predefined direction is received, as shown in an example of FIG. 15C, the controller 180 can control a plurality of card images 1540/1550/1560 to be outputted at the same time

In this case, each of a plurality of the card images 1510/1520/1530 may correspond to a card of a different type. As an example, the controller 180 can output a plurality of card images of different types such as a membership card providing discount in 'A' store, a point card capable of accumulating a membership point in the 'A' store, a credit card providing a discount benefit in the 'A' store and the like in response to a user input. As shown in the example, if types of a plurality of the card images 1510/1520/1530 outputted via the display unit 151 are different from each other, a user may be able to continuously perform such an act as discount, payment and point accumulation and the like using all of a plurality of the cards.

And, referring to FIG. 15C, at least a part of a plurality of card images 1540/1550/1560 may correspond to a security card image 1550. In this case, the security card image 1550 may correspond to a card capable of invading a privacy of a card holder when information included in the outputted card image is exposed. For example, a card 1550 requiring security may correspond to a credit card, by which the present invention may be non-limited. In this case, the controller 180 can control a security indicator 1555 to be outputted on the card 1550 requiring security and control such information as a card number of the card 1550 requiring security not to be outputted.

As a different example, if a drag input of which a pointer is dragged into a first direction is received, the controller 180 can control a card image of a first type card to be outputted.

On the contrary, if a drag input of which a trajectory of a pointer is changed from a first direction to a second direction or a third direction (e.g., a direction orthogonal to the first direction) is received, the controller 180 can control a card image of a second type or a third type card to be outputted.

FIG. 16A shows an example that a card image 1610 of a credit card is outputted as the drag input of which the pointer is dragged into the first direction (upper direction) is received and FIG. 16B shows an example that a card image 1620 of a membership card is outputted as a drag input of which a trajectory of a pointer is changed from a first direction to a second direction (right direction) is received. FIG. 16C shows an example that a card image 1630 of a debit card is outputted as a drag input of which a trajectory of the pointer is changed from a first direction to a third direction (left direction) is received.

As depicted in FIGS. 15 and 16, when a plurality of cards are registered, a card, which is called in response to a predetermined user input, may correspond to a card most recently used by a user, a card most frequently used by a user for a prescribed period, a card of which a limit of card use is highest, a card of which remaining amount of money to the limit of card use is highest, a card of which discount amount is biggest, a card of which an amount of point accumulation is biggest, a card configured as a main card, or a card appropriated for a position of the mobile terminal 100. Moreover, in case of calling a plurality of cards in response to a predetermined user input, it may be able to extract a plurality of cards on the basis of one of the aforementioned conditions or extract a plurality of cards of different types satisfying the aforementioned conditions.

FIGS. 15 and 16 shows an example of controlling types and numbers of cards to be outputted via the display unit 151 according to length and direction of a drag input. As a different example, the controller 180 can control types and numbers of cards to be outputted via the display unit 151 based on dragging speed of a pointer or pressure (normal touch/force touch) of the pointer putting on the display unit.

As an example, similar to the example mentioned earlier in FIG. 11, if a card of number 3 is selected as a main card, the controller can control a card image of the card of number 3 to be outputted in response to a predetermined user input.

As a different example, the controller 180 can control a card image of a card indicated by voice of a user to be outputted according to a predetermined user input.

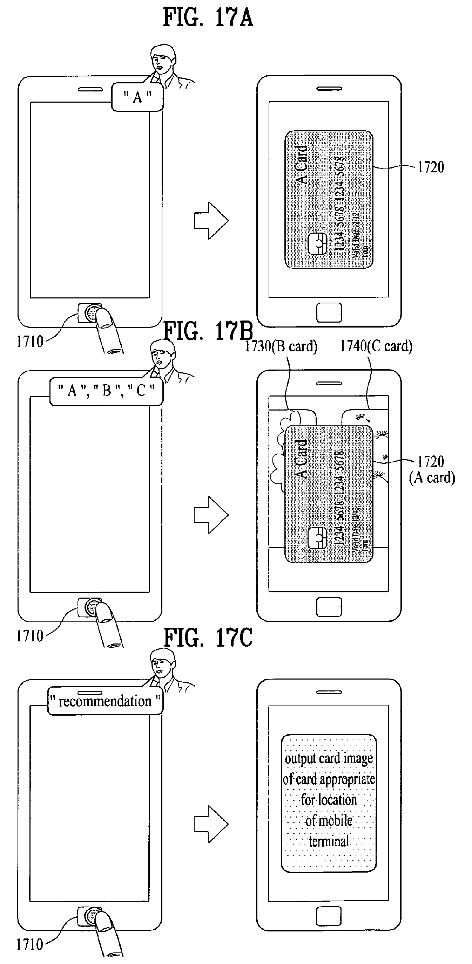

As an example, FIGS. 17A, 17B and 17C are diagrams for an example of outputting a card indicated by voice of a user. If a home button is pushed or a proper fingerprint of a user is inputted, the controller 180 can activate a microphone 122. When the microphone 122 is activated, if user voice is received, the controller 180 converts the user voice (speech to text) into text and can output a card image of a card indicated by the converted text.

As an example, after a fingerprint is inputted via a fingerprint recognition unit 1710, as shown in an example of FIG. 17A, if voice such as 'A' is inputted, the controller 180 can control a card image of 'A' card indicated by the user voice to be outputted on the display unit 151.

If a user sequentially mentions names of a plurality of cards, the controller 180 can output card images of a plurality of the cards indicated by the user voice on the display unit 151.

As an example, after a fingerprint is inputted via the fingerprint recognition unit 1710, as shown in an example of FIG. 17B, if voice such as 'A', 'B' and 'C' are inputted, the controller 180 can control all card images of 'A' card 1720, 'B' card 1730 and 'C' card indicated by the user voice to be outputted on the display unit 151.

As a different example, the controller 180 can call out a card appropriate for a user based on a position of a mobile terminal. As an example, if the position of the mobile terminal corresponds to 'A' store, the controller 180 can control a card providing discount in the 'A' store or a card capable of accumulating a membership point in the 'A' store to be outputted. If it is determined as the position of the mobile terminal corresponds to 'B' store, the controller 180 can control a card providing discount in the 'B' store or a card capable of accumulating a membership point in the 'B' store to be outputted. If the position of the mobile terminal corresponds to a place near a bus stop, the controller 180 can control a card to which a transportation card function is mounted to be outputted.

If there exist a plurality of recommendable cards appropriate for a position of a mobile terminal, the controller 180 may output card images of a plurality of the cards at the same time or can representatively output one of a plurality of the cards. And, the controller can control a different card to be outputted according to a user input.

An embodiment of recommending a card appropriate for a position of a mobile terminal can be initiated by user voice. As an example, as shown in an example of FIG. 17C, if such voice as 'recommendation' is inputted, the controller 180 can control a card image of a card appropriate for a position of a mobile terminal to be outputted on the display unit 151.

If a mobile terminal is located at the inside of a store and the mobile terminal receives discount information of the store from a terminal (e.g., AP or Bluetooth beacon) capable of communicating with the mobile terminal, the controller 180 can output a card image of a card appropriate for a user based on the received discount information.

As an example, if discount information indicating that discount is provided when 'A' card is used to make a payment in a specific store is received from a Bluetooth beacon in the specific store, the controller 180 can control a card image of the 'A' card to be outputted via the display unit 151.

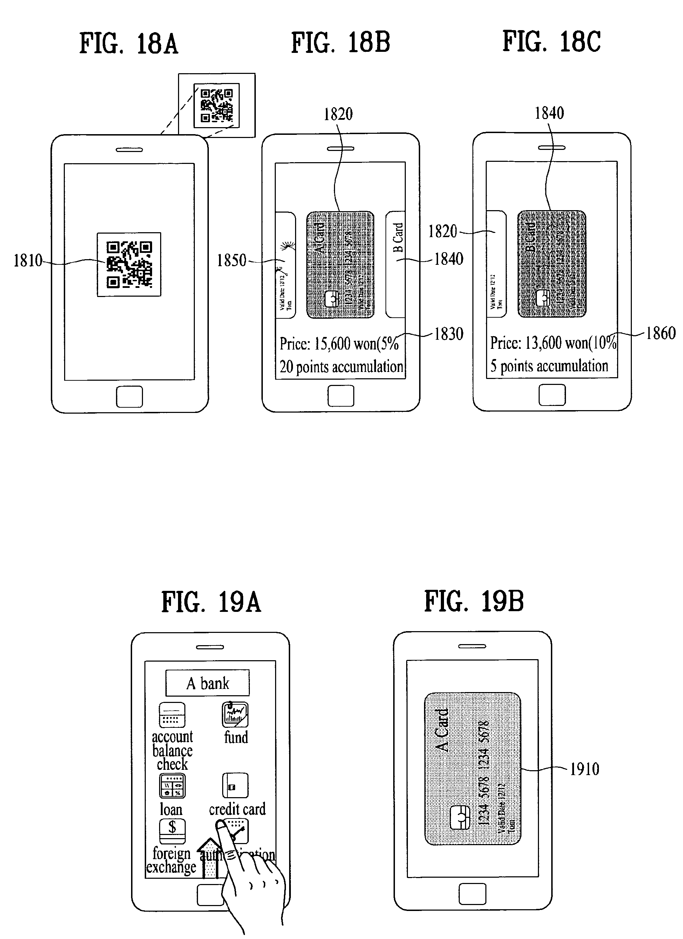

As an example, FIGS. 18A to 18C are diagrams for an example of outputting a card image of a card appropriate for a purchase of a user.

If an identification code image of a product to be purchased is inputted via a camera 121, the controller 180 scans an identification code of the product and may be able to obtain information on the product to be purchased by a user. In this case, the controller 180 can obtain sales information of the product in accordance with the obtained identification code from an external server. In this case, the sales information can include a price of the product, information on a card providing discount on the product, information on a card capable of accumulating membership point and the like.

If the sales information of the product is obtained, the controller 180 can control a card providing discount on the product, a card capable of accumulating membership point when the product is purchased, and the like to be outputted.

As an example, FIGS. 18A and 18B show an example that QR code 1810 of a product to be purchased is scanned and a card image 1820 of a card providing discount on the product is outputted. As shown in the example of FIG. 18B, the controller 180 can control information 1830 on benefit (e.g., discount rate, discounted price, membership point capable of being accumulated, etc.) capable of being obtained when the card is used to make a payment to be outputted

When a payment is made for a product, if there exist a plurality of recommendable cards, the controller 180 may output card images of a plurality of the recommendable cards at the same time or can representatively output one of a plurality of the cards. And, the controller can control a different card to be outputted according to a user input.

As an example, FIG. 18B shows an example that a card image 1820 of one card among a plurality of the recommendable cards is outputted at the center and a part of different card images 1840/1850 is outputted at both sides of the display unit 151. The controller 180 can control a card image of a different card to be outputted at the center in response to a user input (e.g., a touch input dragging a pointer to the left or right). As an example, FIG. 18C shows an example that the card image of the different card is outputted at the center of the display unit according to a user input. If a card (i.e., a selected card) displayed at the center of the display unit 151 is changed, as shown in the example of FIG. 18C, the controller 180 can output benefit information 1860 capable of being obtained by a changed card.

If an application of a bank or a card company is executed via a mobile terminal, the controller 180 can control a card image of a card related to the currently executed application to be outputted.

As an example, FIGS. 19A and 19B are diagrams for an example of outputting a card image related to an application currently executed via a mobile terminal.

When an application for using a banking system of 'A' bank is executed via a mobile terminal, if a predetermined user input (e.g., as shown in the example of FIGS. 13A to 13C, a drag input dragging a pointer touching an edge of the display unit 151 to the inside of the display unit 151) is received, the controller 180 can control a card image of a card issued by the 'A' bank to be outputted on the display unit in response to the user input. FIGS. 19A and 19B show an example that a card image 1910 of 'A' card issued by the 'A' bank is outputted according to reception of a predetermined user input when an application of the 'A' bank is executed.

If there exist a plurality of cards issued by the 'A' bank, the controller 180 can output a plurality of card images at the same time or can representatively output one of a plurality of the card images. The controller can change a card image according to a user input.

In a state that an application is outputted as a background, the embodiment mentioned earlier with reference to FIG. 19 can also be applied.

It is able to apply the embodiment mentioned earlier with reference to FIG. 19 when an application of a different type as well as a bank application is executed. For example, if a user input for displaying a card image is received in the middle of executing an application for checking accumulated points, the controller 180 can control a card image corresponding to a point card related to a point accumulation application to be displayed in response to the user input. As a different example, if a user input for displaying a card image is received in the middle of executing an application for checking a membership point, the controller 180 can control a card image corresponding to a membership card related to a membership point application to be displayed in response to the user input.

The controller 180 can determine not only an application but also a card image to be displayed in relation to an attribute of a currently outputted web page. For example, when a web page of a bank or a card company is outputted, the controller 180 can control a card image of a card related to the web page to be outputted.

If cards different from each other are mapped to fingers of a user, respectively, the controller 180 can control a card image of a card mapped to an inputted fingerprint to be outputted via the display unit 151.

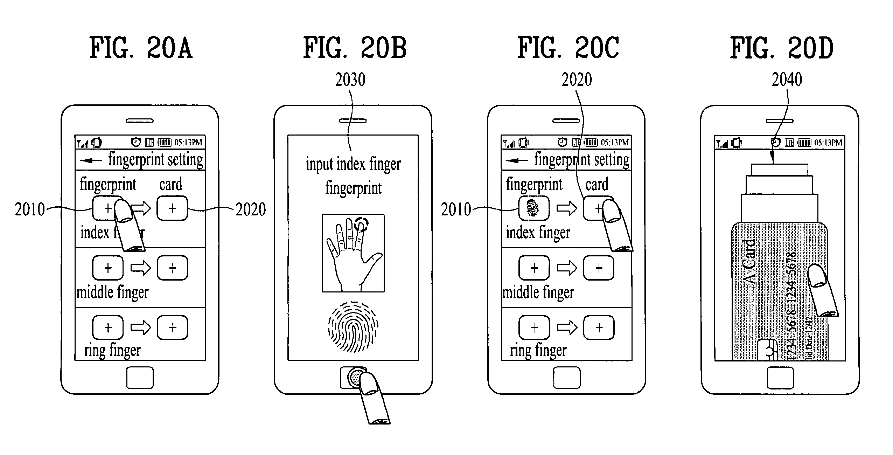

As an example, FIGS. 20A to 20D are diagrams for an example of outputting a menu for mapping cards different from each other according to each finger. An example of FIG. 20A shows that the outputted menu includes a fingerprint input area and a card selection area 2020 according to a finger.

If a fingerprint input area for a specific finger is touched, as shown in an example of FIG. 20B, the controller 180 can output a message 2030 guiding to input a fingerprint for the specific finger. FIG. 20A and 20B show an example that a user input guiding to input a fingerprint of an index finger is outputted. If a user inputs a fingerprint of a specific finger, as shown in an example of FIG. 20C, the controller 180 can display the inputted fingerprint in the fingerprint input area 2010 of the specific finger or may be able to control a message to be outputted to indicate that the fingerprint of the specific finger is inputted.

Subsequently, if the card selection area 2020 for a specific finger is touched, as shown in an example of FIG. 20D, the controller 180 can control a list of cards to be outputted to select a card mapped to a fingerprint of the specific finger. If one card is selected from the list of cards, the selected card can be stored in a manner of being mapped to an inputted fingerprint.

As an example, if a user selects 'A' card from a list of cards shown in FIG. 20D, the 'A' card can be stored in a manner of being mapped to a fingerprint of an index finger.

If 'A' card is selected as a card mapped to an index finger and 'B' card is selected as a card mapped to a middle finger via UI shown in FIGS. 20A to 20D, when a fingerprint of a user is inputted to output a card image, the controller 180 can control a card image of a card mapped to the inputted fingerprint to be outputted. As an example, if a fingerprint of the index finger is inputted, a card image of the 'A' card mapped to the fingerprint of the index finger is outputted. If a fingerprint of the middle finger is inputted, a card image of the 'B' card mapped to the fingerprint of the middle finger can be outputted.

In the embodiment mentioned earlier with reference to FIG. 20, one of fingers of a user can be utilized for a usage of outputting a list schematizing a mapping relation between a finger and a card.

As an example, an index finger, a middle finger, a ring finger and a little finger can be mapped to one of cards, respectively. And, thumb can be used for outputting card information associated with the rest of fingers. As an example, when the index finger is associated with A card and the middle finger is associated with B card, if a fingerprint is inputted via the thumb, the controller can control information indicating that the index finger is associated with the A card and the middle finger is associated with the B card to be outputted via the display unit.

According to the embodiment mentioned above, a user is able to easily check card information mapped to each finger. For example, when a user is unable to precisely remember a card mapped to each finger, the user is able to check card information mapped to each finger via thumb authentication before a card image is called. The user can precisely recognize a finger to be used for calling a card preferred by the user via the displayed information.

One of navigation keys can be utilized to check a recently executed application. If a navigation key for checking the recently executed application is touched, a mobile terminal according to the present invention can control a list of recently executed applications and a list of recently checked (or used) cards to be outputted.

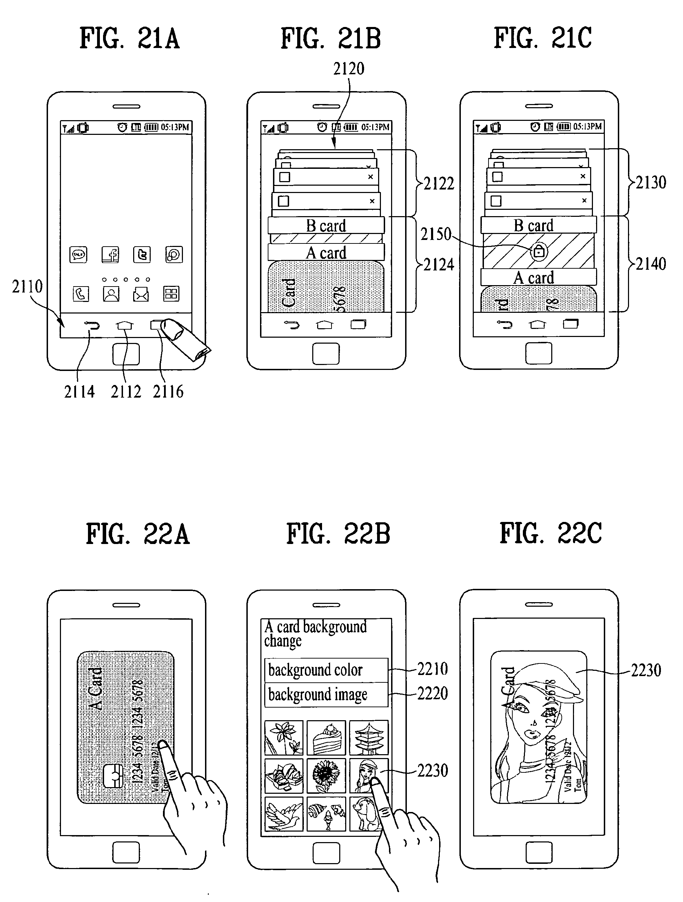

As an example, FIGS. 21A to 21C are diagrams for explaining an operation of a mobile terminal when a navigation key is touched to check a recently executed application.

FIGS. 21A to 21C show an example that a navigation bar 2110 including navigation buttons such as a home button 2112, a cancel button 2114, a button 2116 for checking a recently executed application and the like is outputted. Although the navigation buttons shown in FIGS. 21A to 21C corresponds to a software button outputted via the display unit 151, the navigation buttons can also be implemented by a form of a physical button selected by a push or a touch of a user at the outside of the display unit 151. Moreover, the navigation buttons capable of being included in the navigation bar may be non-limited by the example shown in the drawing.

If a user input touching the button 2116 for checking a recently executed application is received in the navigation bar, the controller 180 can control the recently executed application and a list of cards recently checked (or used) by a user to be outputted in response to the user input.

As an example, FIG. 21B shows an example that an integrated list 2120 including a recently executed application 2122 in a mobile terminal and a card image 2124 recently checked in the mobile terminal is outputted.

As a different example, the controller 180 can control a list of recently executed applications and a list of recently checked (or used) cards to be individually outputted in response to a user input touching the button for checking a recently executed application.

As an example, FIG. 21C shows an example that the list of recently executed applications in the mobile terminal is outputted via a first area 2130 of the display unit 151 and the list of recently checked cards in the mobile terminal is outputted via a second area 2140 of the display unit 151.

If one application is selected from the list of the recently executed applications, the controller 180 executes the selected application and can control an execution screen of the selected application to be outputted via the display unit 151. If a card is selected from the list of the recently checked cards, the controller 180 can control a card image of the selected card to be outputted via the display unit 151.

FIGS. 21B and 21C show an example that both the list of the recently executed applications and the list of the recently checked (or used) cards are outputted in response to a user input touching the button for checking a recently executed application. Unlike the example, the controller 180 can preferentially output the list of the recently executed applications in response to the user input touching the button for checking a recently executed application and can control the list of the recently checked (or used) cards to be outputted only when an additional user input (e.g., a drag input dragging a pointer touching an edge of the display unit 151 to the inside of the display unit 151) is received.

When the list of recently checked (or used) cards is outputted in response to the user input touching the button for checking a recently executed application, the controller 180 may be able to visually and distinctively display a card in a lock state to indicate that the card is configured by the lock state.

As an example, FIGS. 21C shows an example that a padlock image 2150 is outputted on the card configured by the lock state. If the card configured by the lock state is selected, the controller 180 does not output card information on a card image until the lock of the card configured by the lock state is cancelled or may be able to restrictively display the card information.

FIG. 21 explains that outputting card information can be restricted according to whether or not a card is in a lock state. Unlike the example, the controller can also determine whether to output receipt information on a card image according to whether or not a card is in a lock state.

As an example, if a card is in a unlock state, the controller 180 can control trade information (e.g., a receipt image) indicating the last use breakdown of the card to be outputted on a card image. On the contrary, if the card is in a lock state, the controller 180 can control output of the trade information to be restricted on the card image.

As a different example, if a card is in a unlock state, the controller 180 controls card information to be outputted via a card image. If the card is in a lock state, the controller can control trade information to be outputted on the card image.

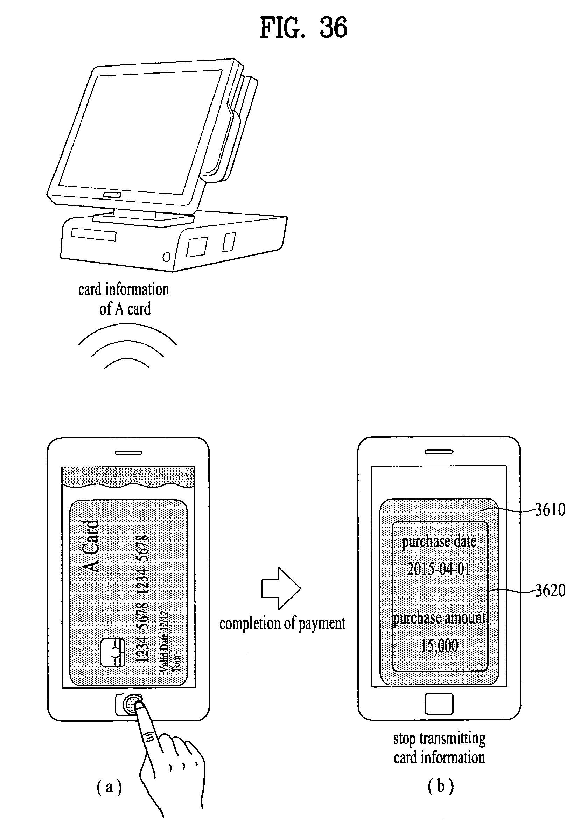

For an example of outputting trade information on a card image, it may refer to FIG. 36.

Various methods of outputting a card image are explained in FIGS. 12A-12B to 21A-21C. In this case, in order to register a card, the controller 180 can configure a card image based on color of a card recognized by capturing the card via the camera 121, extract a part corresponding to the card from a picture of the card, and may be able to configure the card image based on the extracted part. In particular, a background color of the card image can be configured based on the color extracted from the picture of the real card and the card image can be captured from the picture of the real card.

In this case, the color or the background of the card image can be changed by a user. As an example, FIGS. 22A to 22C are diagrams for an example of changing color or a background of a card image.

If a predetermined user input is received while a card image is outputted, the controller 180 can control a menu for changing background color or a background of the card image to be outputted.

As an example, in FIGS. 22A and 22B, if a user input (i.e., a user input touching the card image for more than prescribed time) long touching the card image is received, the controller 180 can control UI capable of changing the background color or the background of the card image to be outputted.

FIG. 22B shows an example that the UI includes a background color tab 2210 for changing background color of a card image and a background image tab 2220 for changing a background of the card image. FIG. 22B shows an example that the background image tab is touched and a list of images stored in a mobile terminal is outputted. If one image is selected from the list of the images, as shown in an example of FIG. 22C, the controller 180 can control the card image to be reconfigured by a background of the selected image 230.

Although it is not depicted, if the background color tab is selected from the UI shown in FIG. 22B, it may be able to output a color code to configure a background color of the card image. If a prescribed color is selected from the color code, the controller 180 can change the background color of the card image with the selected color.

Although FIGS. 22A to 22C show an example that a user input for changing a background color or a background of a card image corresponds to a long touch touching the card image, it is apparent that a touch input of a different form can also be applied. For instance, a gesture input, voice, button control and the like can be applied as a user input.

If a predetermined user input is received while a card image is outputted, the controller 180 can control use breakdown information of a card corresponding to the card image to be outputted.

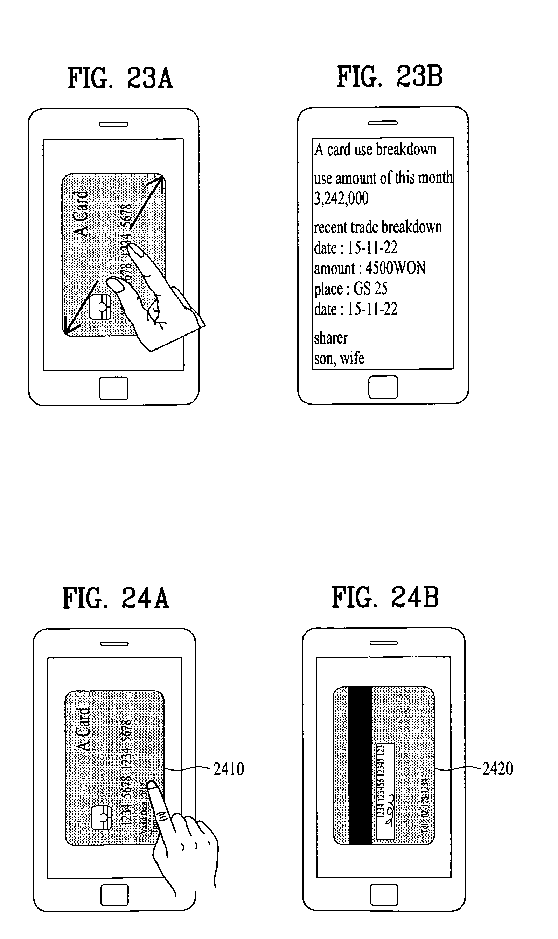

As an example, FIGS. 23A and 23B are diagrams for an example of outputting use breakdown information of a card.

If a predetermined user input is received while a card image is outputted, the controller 180 can control use breakdown information of a card corresponding to the card image to be outputted.

As an example, FIGS. 23A and 23B show an example that card use breakdown information is outputted when a pinch-out input (i.e., a touch input of which a distance between two pointers touching a card image is gradually increasing) is received on a card image.

The card use breakdown information can include card use amount for a prescribed period, number of use of a card for a prescribed period, limit of card use, breakdown of recent card use, a memo recorded by a user for a card, a card hotline, information on a card sharer (e.g., if a card is used in a manner of being registered at both a mobile terminal according to the present invention and a different terminal at the same time, information on a user of the different terminal), and the like.

As an example, FIG. 23B shows an example that the card use amount for a prescribed period, the breakdown of recent card use and the information on a card sharer are outputted on a card image.

In the example shown in FIG. 23B, if the card hotline is touched, the controller 180 can make a call to the card hotline. Similarly, if the information on the card sharer is touched, the controller 180 can make a call to the card sharer or output a message writing screen to transmit a message to the card sharer.

At least a part of the card use breakdown information can be received from a server of a card company or obtained by analyzing a text message received by a mobile terminal when a payment is made by a card. As an example, if a text message in which a card use breakdown is recorded is received whenever a payment is made by a card, the controller 180 may be able to calculate the card use amount during a prescribed period in a manner of analyzing text messages received during the prescribed period and may be able to determine the breakdown of recent card use via a most recently received text message among the text messages related to payment.

Although FIGS. 23A and 23B show an example that a user input for checking a card use breakdown corresponds to a pinch-out input, it is apparent that a touch input of a different form can also be applied. For instance, a gesture input, voice, a button control and the like can be applied as the user input.

As mentioned earlier with reference to FIGS. 3A and 3B, the controller 180 can register a card using both a picture of a front side of the card and a picture of a back side of the card. If a card is registered based on a picture of a front side of the card and a picture of a back side of the card, the controller 180 outputs one of a front side image of the card indicating the front side of the registered card and a back side image of the card indicating the back side of the registered card and may be able to control another to be outputted in response to a user input.

As an example, FIGS. 24A and 24B are diagrams for an example of changing an output of a display unit 151 from a front side image of a card to a back side image of the card.

FIG. 24A shows an example that a front side image 2410 of a registered card is outputted. Card information such as a card name, a card holder, expiration date and the like can be outputted on the front side image 2410.

If a user input touching the front side image 2410 is received while the front side image 2410 of the card is outputted, as shown in an example of FIG. 24B, the controller 180 can control a back side image 2420 of the card to be outputted. Card information such as CVC, a signature image, a card hotline and the like can be outputted on the back side image 2420.

In particular, as shown in the example of FIGS. 24A and 24B, the controller 180 selectively outputs one of the front side image and the back side image of the card and can control card information different from each other to be outputted via the front side image and the back side image of the card.

When a card image is outputted, if a drag input is received via the display unit 151, the controller 180 can call out a card of a next turn or a previous turn, share the card image or perform an operation of turning off the display unit 151 or the like according to directivity of the drag input.

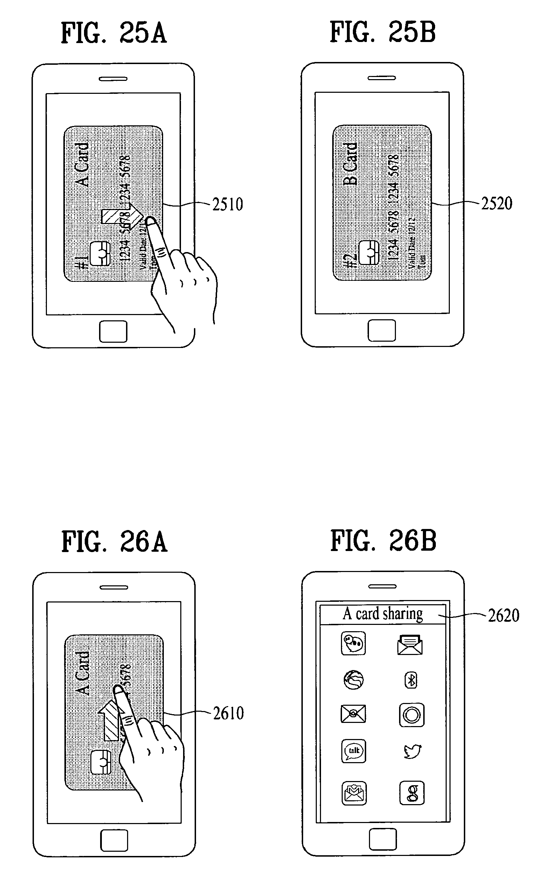

As an example, FIGS. 25A-25B to 27A-27B are diagrams for an example of an operation of a mobile terminal when a drag input is received while a card image is outputted. While a card image is outputted, if a drag input dragging a pointer touching the card image to the left or the right is received, the controller 180 can control a card image of a next turn or a card image of a previous turn to be outputted in response to the drag input. As an example, FIGS. 25A and 25B show an example that the card image of the next turn is outputted according to the pointer dragged to the right (card 2510 of number 1 -> card 2520 of number 2).

While a card image is outputted, if a drag input dragging a pointer touching the card image to the top is received, the controller 180 can control an operation of sharing the card image (or card information) to be performed. As an example, FIGS. 26A and 26B show an example that a menu 2620 for selecting a medium (e.g., a text message, an instant message, e-mail or the like) for sharing a card image (or card information) is outputted as a pointer touching a card image 2610 is dragged to the top. If the medium for sharing the card image (or card information) is selected and a counterpart with which the card image (or card information) is shared is determined, the controller 180 can transmit the card image (or card information) to a terminal of the determined counterpart. In this case, the controller 180 captures the card image 2610 and may be then able to transmit the captured card image to the terminal of the counterpart. Or, the controller can transmit card information of a card corresponding to the card image to the terminal of the counterpart.

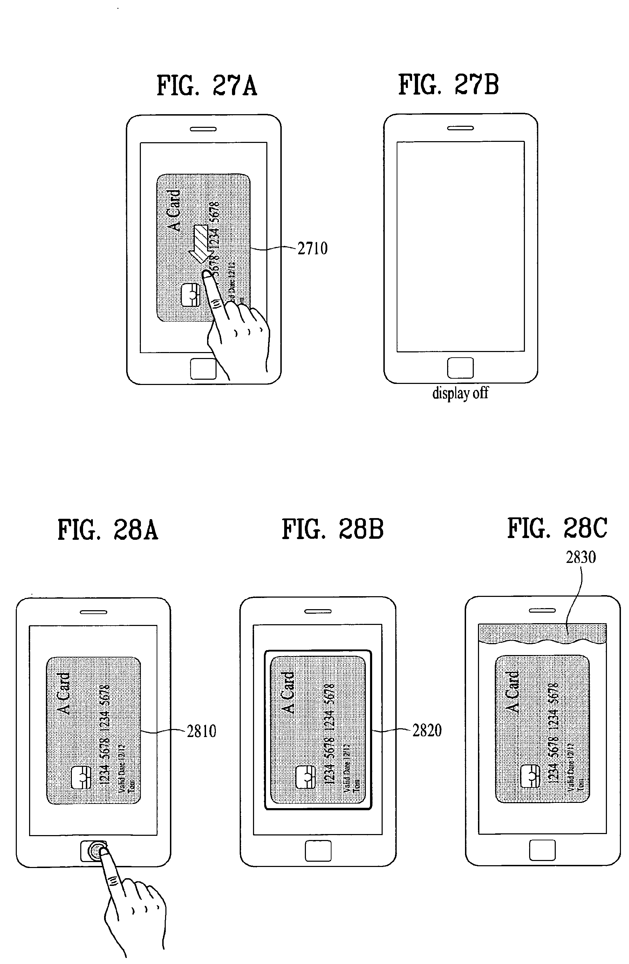

While a card image is outputted, if a drag input dragging a pointer touching the card image to the bottom is received, the controller 180 can control output of the card image to be terminated in a manner of turning off the display unit 151. As an example, FIGS. 27A and 27B show an example that the display unit 151 is turned off and the output of the card image is terminated as the pointer touching the card image 2710 is dragged to the bottom.

Unlike the example shown in FIGS. 27A and 27B, the controller 180 stops outputting the card image and can control a lock screen or a home screen to be outputted in response to a user input dragging the card image to the bottom.

If a card image is outputted in response to a user input selecting a card from a list of cards, the controller 180 stops outputting the card image and can control the list of cards to be outputted again in response to a drag input dragged to the bottom.

A moving direction of a pointer mentioned earlier in FIGS. 25A-25B to FIGS. 27A-27B is just an assumption. In particular, in the example of FIGS. 26A and 26B, although an operation of sharing a card image (or card information) is performed when a pointer moves to the top, unlike the example, the operation of sharing the card image (or card information) can be configured to be performed when the pointer moved to the bottom. Moreover, functions mentioned earlier with reference to FIGS. 25A-25B to FIGS. 27A-27B can be implemented not only by a drag input but also by a touch input or a gesture input of a different form.

Referring back to FIG. 8, if user authentication is completed while a card image is outputted [S820], the controller 180 transmits card information corresponding to the card image to a payment terminal and can control a payment to be performed between a mobile terminal and the payment terminal [S830].

In this case, the payment terminal can include a POS (point of sales) terminal including a magnetic card reader, a mobile POS terminal including a magnetic card reader, an NFC payment terminal and the like. If a card image is displayed, the controller 180 can control a communication module (e.g., an NFC module or a short-range magnetic stripe communication module) used for performing a payment to be activated to perform a payment by a card corresponding to the displayed card image. In this case, the card information transmitted to the payment terminal by the mobile terminal can include at least one selected from the group consisting of a card name, a card issuer, a card number, expiration date, CVC and a signature image.

As an example, if the mobile terminal approaches to the NFC payment terminal after the user authentication is completed, the controller 180 can transmit the card information to the NFC payment terminal. Subsequently, the NFC payment terminal can perform a payment based on the received card information.

As a different example, if the user authentication is completed, the controller 180 can broadcast the card information via the magnetic stripe communication module. Subsequently, as the mobile terminal approaches to the magnetic payment module, if the magnetic payment terminal enters an audible range of the magnetic stripe communication module, the magnetic payment terminal is able to listen to the card information broadcasted by the mobile terminal. Subsequently, the magnetic payment terminal can perform a payment based on the card information.

If an outputted card image is in a lock state, the controller 180 can output a message before user authentication is performed to request to cancel a lock of the card image. In particular, the controller 180 can control the user authentication to be performed after lock of a card is cancelled.

The user authentication can be performed using such a medium as bio-information, a predetermined password, a predetermined touch pattern, tapping the display unit 151 according to a predetermined pattern, a signature voice and the like.

If a prescribed user input is received, the controller 180 can perform the user authentication. Yet, the controller 180 can also perform the user authentication in a manner of comparing an input received while a card image is outputted and predetermined authentication information with each other.

As an example, when a card image is outputted, if iris of a user is recognized by the camera 121 and the recognized iris is matched with a predetermined iris, or, when a card image is outputted, if a fingerprint is recognized and the recognized fingerprint is matched with a predetermined fingerprint, the user can be authenticated. Or, when a card image is outputted, if a touch input pattern received via the display unit 151 taps the display unit 151 according to a predetermined touch pattern or a predetermined pattern, the user can be authenticated. When a card image is outputted, if a trajectory of a pointer dragged on the display unit 151 corresponds to a predetermined signature image (or a signature image of a card to be used), the user can be authenticated. Or, when a card image is outputted, if voice inputted via the microphone 122 is matched with predetermined voice of an identical person, the user can be authenticated.

If user authentication is performed based on a user input, the controller 180 can control a message (e.g., a message requesting an iris input or a fingerprint input) necessary for the user authentication to be outputted via the display unit 151.

When the user authentication is completed, the controller 180 can control information indicating that a payment is performable via a card image to be outputted via the display unit 151.

As an example, FIGS. 28A to 28D are diagrams for an example of outputting information indicating that user authentication is completed.

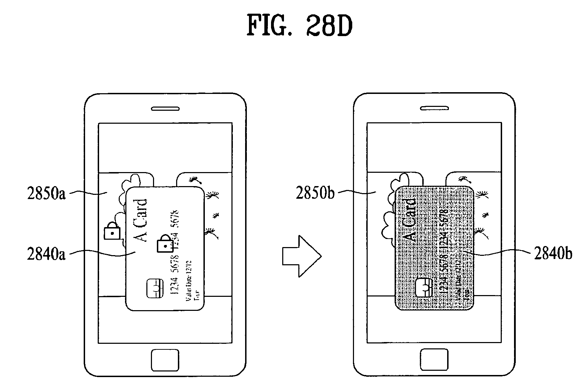

More specifically, FIGS. 28A to 28C show a case of performing user authentication in a state of outputting a card image and FIG. 28D shows a case of performing user authentication in a state of outputting a card image of a security state.

As shown in an example of FIG. 28A, when a card image 2810 is outputted, if a proper fingerprint is inputted via a fingerprint input unit, user authentication can be completed. In this case, the controller 180 can control information indicating that the user authentication is completed to be outputted via the display unit 151. As an example, FIG. 28B shows an example that an image object 2820 surrounding the card image is outputted and indicates that the user authentication is completed. FIG. 28C shows an example that an image 2830 of a wave-shape is outputted at one end of the display unit 151 to indicate that the user authentication is completed.

Unlike the example of FIG. 28B, it may also be able to indicate that the user authentication is completed via a message, an icon, color change of a card image, On/Off of a specific image object (e.g., a prescribed image object is outputted before the user authentication is completed and display of the prescribed image object is terminated after the user authentication is completed) and the like.

Meanwhile, in an embodiment of FIG. 28D, if a proper fingerprint is inputted while at least one or more card images 2840a/2850a of a security state are outputted, the controller 180 can control card images 2840b/2850b of a security release state to be outputted in a manner of changing the card images 2840a/2850a of the security state. Assume that the card images 2840a/2850a of the security state are identical to the card image of the security state mentioned earlier in FIG. 15C. In this case, although it is not depicted in FIG. 28D, an additional fingerprint input may be required to additionally perform authentication for card payment while the card images 2840b/2850b of the security release state are outputted. Or, although it is not depicted in FIG. 28D, if a proper fingerprint is inputted while the card images 2840a/2850b of the security state are outputted, the controller 180 can control authentication for payment to be completed and control the card images 2840b/2850b of the security release state to be outputted at the same time. For example, assume that a card image 2840 of a security release state is in a state identical to a state of the card image 2810 shown in FIGS. 28A to 28C.

And, although it is not depicted in FIG. 28D, if a proper fingerprint is inputted while a single card image 2840a of a security state is outputted at the center of a touch screen among a plurality of card images 2840a/2840b, the controller 180 can control the card image 2840a of the security state, which is outputted at the center of the touch screen, to be changed to a card image 2840b of a security release state and control the card image 2840b of the security release state to be outputted only. If the user authentication is completed, the controller 180 can transmit payment information to the payment terminal. In particular, after the user authentication is completed, the controller 180 can control the magnetic stripe communication module to broadcast card information. The controller 180 can maintain output of the information indicating that the user authentication is completed while payment information is transmitted. In particular, the information outputted according to the completion of the user authentication can also be used for indicating that card information is transmittable to the payment terminal.

In this case, if a payment with the payment terminal is completed, the controller 180 can stop transmitting the card information. In particular, if a payment is performed after the user authentication is completed (as an example, if a mobile terminal transmits payment information to the payment terminal or the mobile terminal receives a message (e.g., a text message) indicating that the payment is completed), the controller 180 can stop transmitting the payment information via the wireless communication unit 110.

As an example, if the user authentication is completed, the controller 180 maintains a state capable of transmitting the card information using an NFC communication module in a manner of turning on the NFC communication module. If the NFC communication module transmits the card information to an NFC payment terminal, the controller can control the NFC communication module to be turned off or control the NFC communication module not to transmit the card information any more.

As a different example, if the authentication is completed, the controller 180 controls the magnetic stripe communication module to broadcast the card information. If the magnetic payment module listens to the broadcasted card information or a text message indicating that a payment is completed is received, the controller can control the magnetic stripe communication module to stop broadcasting the card information. If the transmission of the card information is terminated, the controller 180 can resume the transmission of the card information only when additional user authentication is performed.

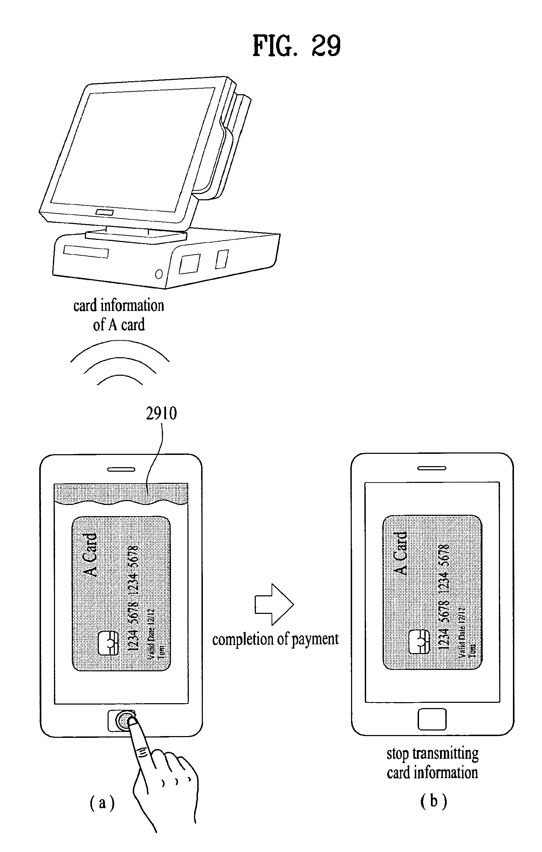

As an example, FIG. 29 is a diagram for an example of terminating transmission of card information as a payment is completed.

If user authentication is completed, as shown in an example of FIG. 29(a), the controller 180 can control information 2910 indicating that the user authentication is completed to be outputted. While the information indicating that the user authentication is completed is outputted, the controller 180 can control the wireless communication unit 110 to be configured as a state capable of transmitting card information. As an example, if the user authentication is completed, the controller 180 can control the magnetic stripe communication module to broadcast the card information.

If a payment is completed, as shown in an example of FIG. 29(b), the controller 180 can control output of the information 2910 indicating that the user authentication is completed to be terminated and can control transmission of the card information to be terminated. As an example, the controller 180 can make the magnetic stripe communication module stop broadcasting the card information while terminating the output of the information 2910 indicating that the user authentication is completed.

As a different example, if the user authentication is completed, while transmitting the card information, the controller 180 can control the transmission of the card information to be terminated when the display unit 151 is turned off. If the transmission of the card information is terminated, the controller 180 can resume the transmission of the card information only when additional user authentication is performed.

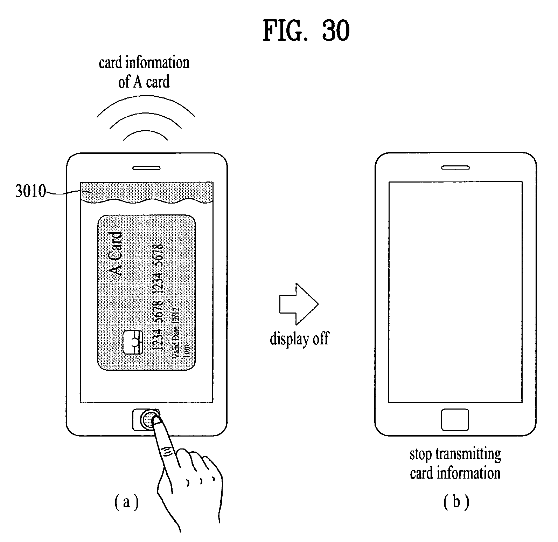

As an example, FIG. 30 is a diagram for an example of terminating transmission of card information as a display unit 151 is turned off.

If user authentication is completed, as shown in an example of FIG. 30(a), the controller 180 can control information 3010 indicating that the user authentication is completed to be outputted. While the information indicating that the user authentication is completed is outputted, the controller 180 can control the wireless communication unit 110 to be configured as a state capable of transmitting card information. As an example, if the user authentication is completed, the controller 180 can control the magnetic stripe communication module to broadcast the card information.

Subsequently, if the mobile terminal enters a power saving mode and the display unit 151 is turned off, as shown in an example of FIG. 30(b), the controller 180 can control transmission of the card information to be terminated. As an example, if the display unit 151 is turned off, the controller 180 can make the magnetic stripe communication module stop broadcasting the card information.

In the example shown in FIG. 30, a user can repeatedly perform a payment without an additional user authentication until the display unit 151 is turned off.

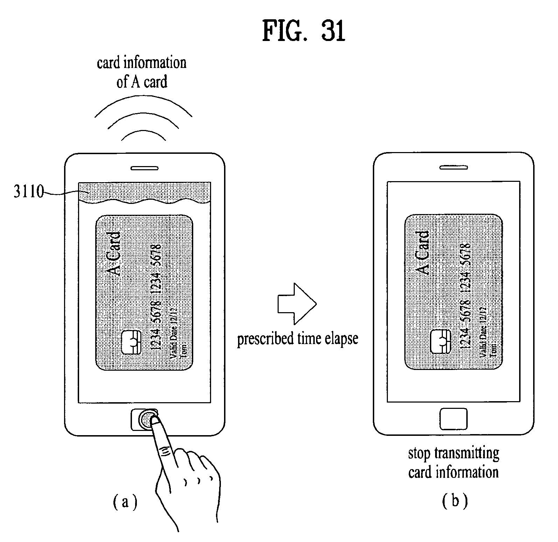

As a different example, if the user authentication is completed, while transmitting the card information, the controller 180 can control the transmission of the card information to be terminated after prescribed time elapses. If the transmission of the card information is terminated, the controller 180 can resume the transmission of the card information only when additional user authentication is performed. As an example, FIG. 31 is a diagram for an example of terminating transmission of card information after prescribed time elapses.

If user authentication is completed, as shown in an example of FIG. 31(a), the controller 180 can control information 3110 indicating that the user authentication is completed to be outputted. While the information indicating that the user authentication is completed is outputted, the controller 180 can control the wireless communication unit 110 to be configured as a state capable of transmitting card information. As an example, if the user authentication is completed, the controller 180 can control the magnetic stripe communication module to broadcast the card information.

If prescribed time elapses, as shown in an example of FIG. 31(b), the controller 180 terminates the output of the information 3110 indicating that the user authentication is completed and can control the transmission of the card information to be terminated. As an example, the controller 180 can make the magnetic stripe communication module stop broadcasting the card information while terminating the output of the information 3110 indicating that the user authentication is completed.

In this case, if it is confirmed that a payment is completed (e.g., if the payment terminal transmits payment information or a text message confirming payment content is received), the controller 180 can control the transmission of the card information to be terminated although the prescribed time does not elapse. In particular, if a payment is performed via the mobile terminal before the prescribed time elapses, the controller can terminate the transmission of the card information. If the transmission of the card information is terminated, the information indicating that the user authentication is completed can also be terminated.

As a different example, if it is confirmed that the payment is completed, the controller 180 can control the prescribed time to be reset. In particular, if the payment is performed using a specific card after the user authentication is completed, the controller 180 can configure the mobile terminal as a state capable of performing a payment without additional user authentication during the prescribed time.

As a different example, if a user selects a different card after the user authentication is completed, the controller 180 can control the transmission of the card information to be terminated. In order to transmit card information of the newly selected card, it is necessary to newly perform user authentication.

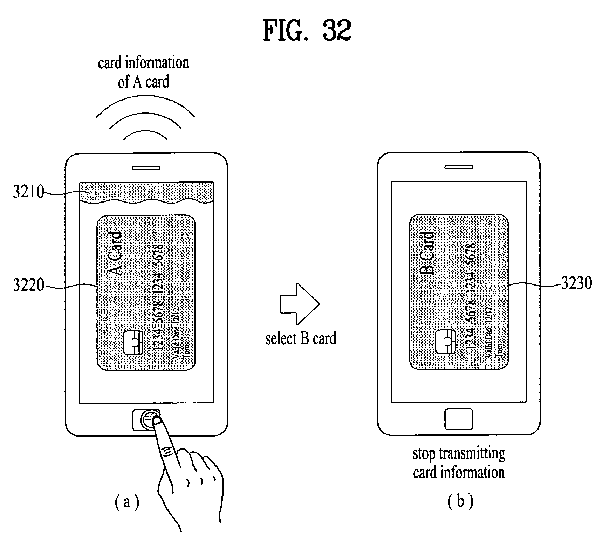

As an example, FIG. 32 is a diagram for an example of terminating transmission of card information as a different card is selected.

If user authentication is completed, as shown in an example of FIG. 32(a), the controller 180 can control information 3210 indicating that the user authentication is completed to be outputted. While the information 3210 indicating that the user authentication is completed is outputted, the controller 180 can control the wireless communication unit 110 to be configured as a state capable of transmitting card information of 'A' card 3220 currently outputted via the display unit 151. As an example, if the user authentication is completed, the controller 180 can control the magnetic stripe communication module to broadcast the card information of the 'A' card 3220.

Subsequently, if the card selected by the user is changed by a touch input of the user, the controller 180 can terminate the card information of the 'A' card. As an example, as shown in an example of FIG. 32(b), if a card outputted via the display unit 151 is changed from the 'A' card 3220 to 'B' card 3230, the controller 180 terminates the output of the information 3210 indicating that the user authentication is completed and may also be able to terminate the transmission of the card information of the 'A' card 3220. As an example, the controller 180 can make the magnetic stripe communication module stop broadcasting the card information of the 'A' card.

In order to transmit card information of the currently displayed 'B' card 3230, it is necessary to additionally perform a user authentication process.

Unlike the example shown in FIG. 32, if a card image is changed from the 'A' card to the 'B' card, the controller 180 may be able to control transmission of the card information of the 'B' card to be newly initiated while terminating the transmission of the card information of the 'A' card.

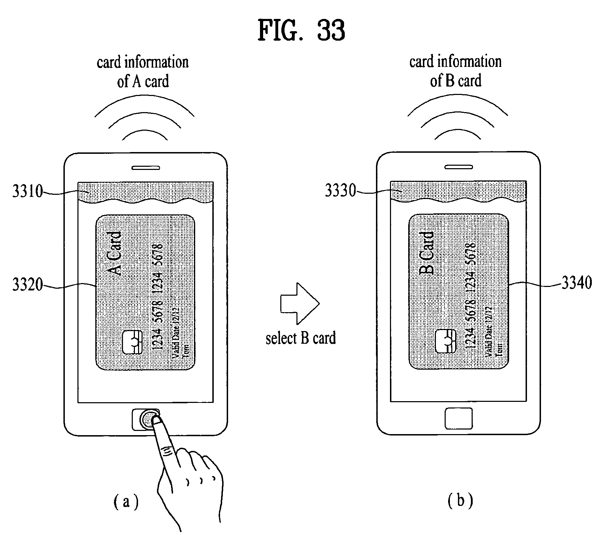

As an example, FIG. 33 is a diagram for an example of changing card information that is transmitted.

If user authentication is performed while 'A' card 3320 is displayed, as shown in an example of FIG. 33(a), while information 3310 indicating that the user authentication is completed is outputted, the controller 180 can control the wireless communication unit 110 to be configured as a state capable of transmitting card information of the 'A' card 3320. As an example, if the user authentication is completed, the controller 180 can control the magnetic stripe communication module to broadcast the card information of the 'A' card 3320.

Subsequently, if a user selects 'B' card 3340 by a touch input of the user, as shown in an example of FIG. 33(b), the controller 180 can configure the wireless communication unit 110 by a state capable of transmitting card information of'B' card 3340 while maintaining the output of the information 3330 indicating that the user authentication is completed. As an example, the controller 180 can control the magnetic stripe communication module to stop broadcasting the card information of the 'A' card 3320 and control the magnetic stripe communication module to broadcast the card information of the 'B' card 3340.

In this case, in order to indicate that card information transmitted via the wireless communication unit 110 has changed, the controller 180 displays the information 3310 indicating that the user authentication is completed with first color while the card information of the 'A' card 3320 is transmitted and may be able to display the information 3330 indicating that the user authentication is completed with second color while the card information of the 'B' card 3340 is transmitted. As a different example, the controller 180 outputs information of a first shape while the card information of the 'A' card is transmitted and may be able to output information of a second shape while the card information of the 'B' card is transmitted.

If a plurality of card images are outputted via the display unit 151, the controller 180 can control one-time user authentication to be effective to all of a plurality of the displayed cards. Specifically, if the user authentication is performed while a plurality of the card images are outputted via the display unit 151, the controller 180 can control card information of a card selected by a user from a plurality of the displayed cards to be transmitted. Subsequently, if a different card is selected from a plurality of the displayed cards, the controller can control card information of the newly selected card to be transmitted without performing additional user authentication.

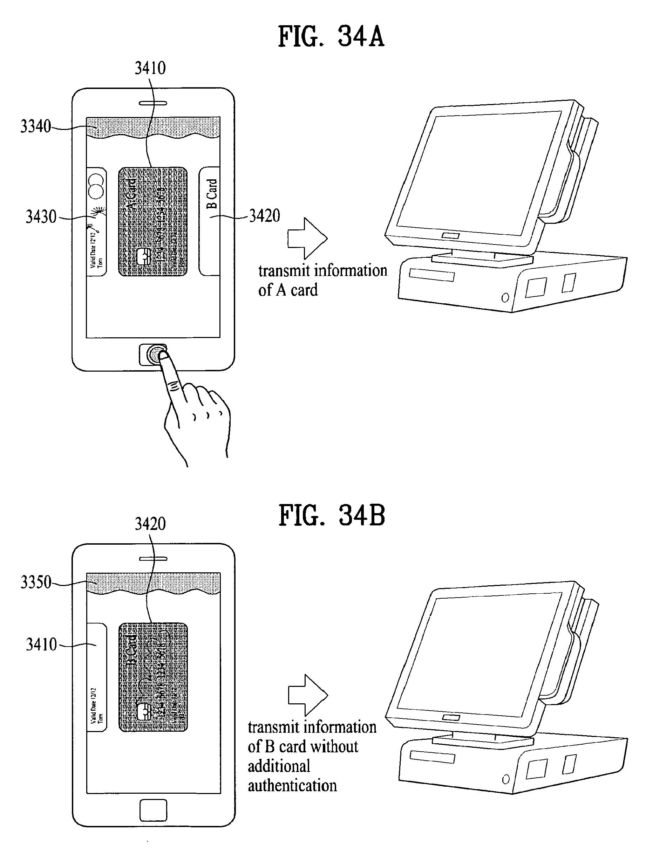

As an example, FIGS. 34A and 34B are diagrams for an example of a user authentication affecting a plurality of displayed cards.

FIGS. 34A and 34B show an example that 3 card images 3410/3420/3430 are outputted via the display unit 151. If user authentication is performed (e.g., if a fingerprint matched with a predetermined fingerprint is inputted) to use a card corresponding to an outputted card image for a payment, as shown in an example of FIG. 34A, the controller 180 can output information 3440 indicating that the user authentication is completed. While the information 3440 is outputted, the controller 180 can configure the wireless communication unit 110 by a state capable of transmitting card information corresponding to a card (e.g., a card 3410 positioned at the center among a plurality of cards) selected by user from a plurality of card images. As an example, the controller 180 can control the magnetic stripe communication module to transmit card information of 'A' card 3410 positioned at the center of a plurality of the displayed cards.

Subsequently, if a different card is selected by a touch input of a user, the controller 180 can configure the wireless communication unit 110 by a state capable of transmitting card information of the selected different card while maintaining the output of the information indicating that the user authentication is completed. As an example, as shown in an example of FIG. 34B, if the card positioned at the center is changed from 'A' card 3410 to 'B' card 3420, the controller 180 can control the magnetic stripe communication module to stop broadcasting card information of the 'A' card and broadcast card information of the 'B' card.

In this case, in order to indicate that the card information transmitted via the wireless communication unit 110 has changed, the controller 180 displays the information 3440 indicating that the user authentication is completed with first color while the card information of the 'A' card is transmitted and displays the information 3450 indicating that the user authentication is completed with second color while the card information of the 'B' card is transmitted. As a different example, the controller 180 outputs information of a first shape while the card information of the 'A' card is transmitted and outputs information of a second shape while the card information of the 'B' card is transmitted.

If a plurality of card images corresponding to a point card, a membership card and a credit card are outputted via the display unit 151, it may be able to use all of the point card, the membership card and the credit card via one-time user authentication.

Although it is not depicted, if use of a card among a plurality of the cards outputted via the display unit 151 is completed, the controller 180 can control the display of the card to be terminated. As an example, when a plurality of card images corresponding to a point card, a membership card and a credit card are outputted, if a discount benefit is applied by the membership card, the controller 180 can control the output of a card image corresponding to the membership card to be terminated on the display unit 151. In this case, whether a use of a prescribed card is completed can be determined in a manner of analyzing a feedback signal received from a payment terminal or a text message received from a card company.

In case of outputting a plurality of card images, the controller 180 can determine an order of cards to be used for payment according to a payment process. As an example, if a payment process is performed in an order of discount application, price settlement and point accumulation, the controller 180 controls a first card (e.g., a membership card) for price discount to be preferentially used among a plurality of the card images. If the use of the first card is completed, the controller can control a second card (e.g., a credit card) for price settlement to be used. After the use of the second card is completed, the controller 180 can control a third card (e.g., a point card) for accumulating points to be used. In particular, the controller 180 can determine a card to be preferentially used among a plurality of cards according to a predetermined payment process.

FIGS. 34A and 34B show an example that a prescribed image object is outputted at one end of the display unit 151 as the user authentication is completed. As a different example, in order to indicate that effectiveness of the user authentication affects all of a plurality of displayed cards, if the user authentication is completed, the controller 180 may be able to change arrangement of a plurality of the displayed cards or display an image object surrounding all of a plurality of the displayed cards.

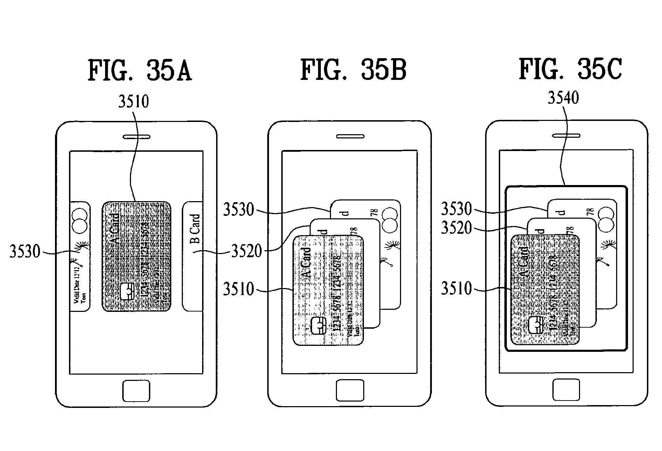

As an example, FIGS. 35A to 35C are diagrams for an example of an output of a display unit 151 when a user authentication is performed in a state that a plurality of cards are displayed.

FIG. 35A shows an example that 3 cards 3510/3520/3530 are arranged on the display unit 151 in a horizontal direction. If user authentication is performed while a plurality of cards are outputted, as shown in an example of FIG. 35B, the controller 180 can control arrangement of a plurality of the cards to be changed. FIG. 35B shows an example that a plurality of the cards 3510/3520/3530 are arranged in a vertical direction.

As a different example, if user authentication is performed while a plurality of card are outputted, as shown in an example of FIG. 35C, the controller 180 can output an image object surrounding all of a plurality of the cards.

Unlike the example shown in FIG. 35C, the controller 180 can output a plurality of image objects respectively surrounding a plurality of the cards to indicate that effectiveness of the user authentication affects all of a plurality of the cards. In the foregoing embodiments, the effectiveness of the user authentication may affect i) one-time payment, ii) a selected card, and iii) a plurality of currently outputted cards. Or, the effectiveness of the user authentication is maintained iv) until the display unit 151 is turned off or v) during a prescribed time. In this case, a plurality of conditions among the aforementioned 5 conditions can be applied to the mobile terminal according to the present invention at the same time.

As an example, the controller 180 can control the effectiveness of the user authentication to affect ii) a selected card only and can control the effectiveness of the user authentication to be cancelled iv) when the display unit 151 is turned off.

As a different example, the controller 180 can control the effectiveness of the user authentication to affect iii) a plurality of currently outputted cards and can control the effectiveness of the user authentication to be cancelled v) when a prescribed time elapses.

FIG. 8 shows an example that card information is transmitted to a payment terminal only when user authentication is performed after a card image is displayed. Unlike the example, a card image to be used for a payment can be displayed after the user authentication is performed. in this case, the controller 180 can transmit card information of a displayed card to the payment terminal after the user authentication is performed.

If the card information is transmitted to the payment terminal and a payment is completed, the controller 180 can control trade information to be outputted via the display unit. The trade information can include such information as a purchase date, purchase amount and the like.

As an example, FIG. 36 is a diagram for an example of outputting trade information. If a payment is completed, the controller 180 can control trade information to be outputted on the display unit. As an example, as shown in an example of FIG. 36 (a) and (b), if the payment is completed, trade information 3620 including a purchase date, purchase amount and the like is outputted on a displayed card image 3610 in a manner of being overlaid.

In this case, the trade information can be obtained from a payment terminal or a server of a card company. As a different example, the controller 180 can obtain the trade information in a manner of analyzing a text message, which is received when a card payment is completed.

Although FIG. 36 (a) and (b) shows an example that the trade information is outputted on the card image in a manner of being overlaid, it is not mandatory that the trade information is outputted on the card image in a manner of being overlaid. As a different example, the controller 180 can control the trade information to be outputted while terminating display of the card image or can control a receipt image including the trade information to be outputted instead of the card image. In this case, the receipt image can be obtained from the payment terminal or the server of the card company. Or, the receipt image can be generated by a mobile terminal based on trade information extracted from a text message, which is received when a card payment is completed.

If a card is registered at a mobile terminal, a user may set a limit on using a real card and a situation that the user intends to perform a payment using the card registered at the mobile terminal only may occur. As an example, if the user loses the real card, the user prevents the real card from being used for a payment and intends to perform the payment using the card registered at the mobile terminal only. To this end, if the user demands restriction on the real card, the controller 180 can request the restriction on the real card to the server of the card company.

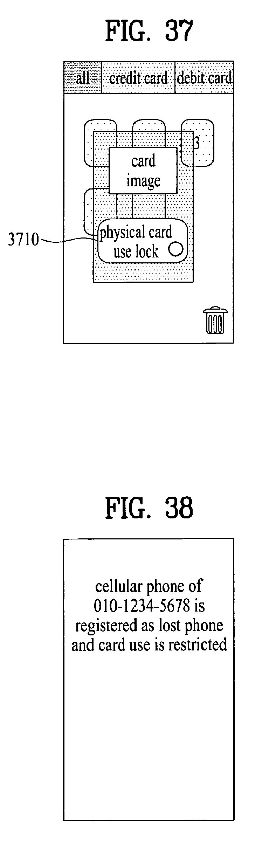

As an example, FIG. 37 is a diagram for a UI provided to demand restriction on use of a real card. If card information of a card registered at a mobile terminal is outputted, the controller 180 can control a menu 3710 capable of selecting whether to put a restriction on use of a real card corresponding to a selected card to be outputted. If usage limit on the real card is requested by operating the menu 3710 (e.g., real card use lock space shown in FIG. 37 is selected), the controller 180 can request usage limit on the real card to the server of the card company. By doing so, if the usage of the real card is restricted, the user can use the card registered at the mobile terminal only.

In addition, if it is determined as the mobile terminal is lost or stolen, the controller 180 can control a payment using a card to be automatically restricted. As an example, if a user loses a mobile terminal and registers the loss of the mobile terminal to a server of a mobile communication company, the controller 180 can set a limit on outputting card information or performing a payment using a registered card until the registration for the loss of the mobile terminal is cancelled. As a different example, if user authentication is completed, card use can be exceptionally permitted although the registration for the loss of the mobile terminal is not cancelled yet.

If a card owned by a different person is registered at a mobile terminal and a mobile terminal owned by a different person is lost, use of the card owned by the different person may be restricted.

As an example, FIG. 38 is a diagram for an example of restricting use of a card owned by a different person. If a card owned by a different person is registered at a mobile terminal and a mobile terminal owned by the different person is registered as being lost to a server of a mobile communication company, it may be able to set a limit on outputting information of the card owned by the different person or using the card owned by the different person until the registration for the loss of the mobile terminal is cancelled. As an example, FIG. 38 shows an example that a message is outputted to indicate that card information of the card owned by the different person is also unavailable according to the registration for the loss of the mobile terminal owned by the different person.

Accordingly, embodiments of the present invention provide various effects and/or features.

According to the present invention, it is able to provide a mobile terminal increasing user convenience.

According to at least one or more embodiments of the present invention, it is able to provide a mobile terminal improving user convenience.

Specifically, the present invention can provide a mobile terminal capable of using a real card in a manner of registering the real card at the mobile terminal and a method of controlling therefor.

It will be appreciated by those skilled in the art that the present invention can be specified into other form(s) without departing from the spirit or scope of the inventions.

In addition, the above-described methods can be implemented in a program recorded medium as processor-readable codes. The processor-readable media may include all kinds of recording devices in which data readable by a processor are stored. The processor-readable media may include ROM, RAM, CD-ROM, magnetic tapes, floppy discs, optical data storage devices, and the like for example and also include carrier-wave type implementations (e.g., transmission via Internet).

It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile terminal, comprising:
a touch screen capable of outputting at least one card image; and
a controller capable of:
controlling a first card image corresponding to a card image to be outputted in response to a first drag input, less than a predetermined reference value, on the touch screen, and
controlling a plurality of card images to be outputted at the same time in response to a second drag input, equal to or greater than the predetermined reference value, on the touch screen,
wherein at least one of the plurality of the card images corresponds to a card image corresponding to location information of the mobile terminal.

2. The mobile terminal of claim 1, wherein the controller is further capable of controlling a second card image corresponding to a card image to be outputted in response to a third drag input which is received immediately after the first drag input, and,
wherein the second card image corresponds to a card image of a type different from a type of the first card image.

3. The mobile terminal of claim 2, wherein a direction of the third drag input is perpendicular to a direction of the first drag input.

4. The mobile terminal of claim 2, wherein a drag input containing the first drag input and the third drag input corresponds to a drag input less than the predetermined reference value.

5. The mobile terminal of any one of claims 1 to 4, wherein a plurality of the card images comprise at least two selected from the group consisting of a credit card image, a membership card image and a point card image.

6. The mobile terminal of claim 5, wherein the card image corresponding to the location information of the mobile terminal corresponds to the membership card image or the point card image corresponding to the location information of the mobile terminal.

7. The mobile terminal of claim 6, further comprising a wireless communication
unit capable of performing communication with a payment terminal,
wherein the location information of the mobile terminal is determined based on a signal received from the payment terminal via the wireless communication unit.

8. The mobile terminal of any one of claims 1 to 7, wherein the first card image corresponds to at least one card image selected from the group consisting of an image of a card lastly used by a user, an image of a card registered as a main card, an image of a card most frequently used during a predetermined period, an image of a card having a highest limit, and an image of a card having a most residual amount left.

9. The mobile terminal of any one of claims 1 to 8, wherein the controller is further capable of deactivating the touch screen in response to a fourth drag input which is received after the first drag input or the second drag input, and
wherein a direction of the fourth drag input is opposite to a direction of the first drag input or a direction of the second drag input.

10. The mobile terminal of any one of claims 1 to 9, wherein the controller is further capable of outputting a lock screen on the touch screen in response to a fifth drag input which is received after the first drag input or the second drag input.

11. The mobile terminal of any one of claims 1 to 10, wherein the controller is further capable of outputting the card image corresponding to the location information of the mobile terminal at the center of the touch screen when a plurality of the card images are outputted.

12. The mobile terminal of any one of claims 1 to 11, wherein the controller is further capable of outputting a card image on which the sixth input is received at the center of the touch screen in a state that a plurality of the card images are outputted in response to a sixth input which is received on at least one of the plurality of the card images.

13. The mobile terminal of any one of claims 1 to 12, further comprising a fingerprint input unit capable of receiving fingerprint information of a user,
wherein the controller is further capable of completing user authentication for a card corresponding to the at least one card image when fingerprint information via the fingerprint input is matched with pre-registered fingerprint information.

14. The mobile terminal of claim 13, wherein the controller is further capable of completing user authentication for cards corresponding to a plurality of the card images in a state that the plurality of the card images are outputted when user authentication for the at least one card is completed.

15. A method of controlling a mobile terminal, comprising the steps of:
outputting a first card image corresponding to a card image in response to a first drag input which is less than a predetermined reference value on a touch screen; and
outputting a plurality of card images at the same time if a second drag input equal to or greater than the predetermined reference value is received on the touch screen,
wherein at least one of a plurality of the card images corresponds to a card image corresponding to location information of the mobile terminal.
